# EUROPEAN PATENT SPECIFICATION

(11) **EP 3 324 105 B1**
(45) Date of publication and mention of the grant of the patent: **30.12.2020**
(21) Application number: 17202062.0
(22) Date of filing: 16.11.2017
(51) Int. Cl.: F21S 41/16, F21S 41/176

(54) **LIGHT LAMP FOR VEHICLE**
LICHTLAMPE FÜR EIN FAHRZEUG
LAMPE D'ÉCLAIRAGE POUR VÉHICULE

(30) Priority: 17.11.2016 KR 20160153337
(43) Date of publication of application: 23.05.2018
(73) Proprietor: LG Electronics Inc., Yeongdeungpo-gu Seoul 07336 (KR)
(72) Inventor: LEE, Oklyeol, 06772 Seoul (KR); PARK, Sulki, 06772 Seoul (KR)
(74) Representative: Vossius & Partner Patentanwälte Rechtsanwälte mbB

(56) References cited:
- EP-A1- 2 716 961
- EP-A2- 2 525 140
- EP-A2- 2 781 408
- EP-A2- 3 205 929
- DE-A1-102016 200 708
- FR-A1- 2 853 717
- US-A1- 2005 105 301
- US-A1- 2007 177 250

## Description

The present invention relates to a light lamp according to the present invention, and more particularly to a light lamp for vehicle which includes a light function module composed of a light source module, a light distribution module, and a dissipation module.

A lighting device, such as a lamp, is installed in a vehicle so as to assist a driver to secure a field of vision by increasing surrounding illumination intensity or notify a current driving state of the vehicle to the outside.

The lighting device installed in the vehicle (hereinafter, referred to as a light lamp for vehicle) may include a head lamp which emits light toward the front of the vehicle, and a rear lamp which indicates the direction of travel of the vehicle or notifies the operation or non-operation of a brake.

The lighting device for vehicle may form a low beam or a high beam to ensure a driver's field of vision during night driving. Recently, the use of light-emitting diodes (LEDs) having high power efficiency and a long lifespan tends to increase.

Meanwhile, a laser diode with an irradiation distance longer than that of an LED can be used as a light source of the lighting device for vehicle.

An object of the present invention is to provide a light lamp for vehicle, which can be made compact with a minimum number of components.

It is another object of the present invention to provide a light lamp for vehicle, which includes a light function module composed of a light source module, a light distribution module, and a dissipation module. US 2005/ 105 301 A1 refers to a lamp for generating light, comprising a semiconductor light emitting element for emitting light, a fluorescent material, provided away from the semiconductor light emitting element, a first optical member operable to focus the light generated by the semiconductor light emitting element on the fluorescent material; and a second optical member having an optical center at a position where the fluorescent material is provided, operable to emit light generated by the fluorescent material based on the light focused by the first optical member to an outside of the lamp.

The object is achieved by the independent claim. Dependent claims refer to preferred embodiments.

In accordance with the present invention, the above and other objects can be accomplished by the provision of a light lamp for vehicle, comprising a plurality of light function modules, wherein each of the plurality of light function modules comprises: a light source module having a light source; a light distribution module disposed in front of the light source module and configured to distribute light emitted by the light source module; and a dissipation module disposed behind the light source module and configured to dissipate heat generated by the light source, and wherein the light source module comprises: a light source lens; a light emission body accommodating the light source lens; a light emission cover covering the light emission body; a phosphor assembly connected to the light
emitting body; and a reflection unit disposed in front of the light source lens and configured to reflect light, passing through the light source lens, toward the light source lens.

The reflection unit may be a coating layer provided on a part of a front surface of the light source lens. The light source lens may have a convex front surface, and the reflection unit may have an arc-shaped cross-section.

The reflection unit may be a concave mirror formed on a front surface of the light source lens.

The reflection unit may be a coating layer coated on the front surface of the light source lens, except for an optical axis of the light source lens.

The phosphor assembly includes a phosphor configured to convert a wavelength of incident light and reflect the wavelength-converted light; a bracket in which the phosphor is mounted; and a dissipation member in contact with a rear surface of the phosphor.

The phosphor assembly includes a phosphor configured to convert a wavelength of incident light; and a dissipation member in contact with a rear surface of the phosphor.

The light emission body includes a light emission head part in which the light source lens is mounted; and a light emission tail part connected to a rear of the light emission head part. A light entrance hole and a phosphor assembly coupling groove are formed at a rear of the light emission head part. The dissipation member may include: a dissipation body; and a phosphor holder connected to the dissipation body and in contact with the phosphor. The phosphor holder may be inserted into the phosphor assembly coupling groove. The dissipation body may be fixed to a rear surface of the light emission head part. The phosphor faces a rear surface of the light source lens.

The light emission body includes a light emission head part in which the light source lens is mounted; and a light emission tail part connected to a rear of the light emission head part, a light entrance hole and a phosphor assembly coupling hole are formed at a rear of the light emission head part, and the phosphor assembly is coupled to a rear of the light emission head part and covers the phosphor assembly coupling hole.

The bracket is fixed to the rear surface of the light emission head part, and the phosphor faces the rear surface of the light source lens.

The phosphor may be a reflective phosphor configured to convert a wavelength of light reflected by the reflection unit and reflect the wavelength-converted light toward the light source lens.

The phosphor may be disposed on an optical axis of the light source lens.

The light emission body may include: a light emission head part in which the light source lens is mounted; and a light emission tail part connected to a rear of the light emission head part, wherein a light source lens insertion hole is formed at a front of the light emission head part, and wherein, when the light source lens is inserted into the light source lens insertion hole, a front surface of the light source lens is exposed outside the light emission head part.

The light emission head part may include a light source lens stopping protrusion formed along an inner circumferential surface of the light source lens insertion hole, and a rear surface of the light source lens may be in contact with the light source lens stopping protrusion.

The light source module may further include a light source lens retainer coupled to a front surface of the light emission head part and fixing the light source lens to the light emission head part.

The light source lens may be fixed between the light source lens stopping protrusion and the light source lens retainer.

The light source lens may have a convex front surface.

The light source lens retainer may include a light blocking section that faces at least part of the front surface of the light source lens.

The light source module may further include a diffuser disposed in front of the light source lens retainer and facing the front surface of the light source lens.

The light emission body may include: a light emission head part in which the light source lens is mounted and a light emission tail part connected to a rear of the light emission head, wherein the light emission tail part is formed at a rear of the light emission tail part, and wherein the light emission cover covers a lower portion of the light emission body and is disposed between the flange section and the light emission head part.

The light source module further comprises a first reducer lens configured to reduce a width of light emitted by the light source, and the first reducer lens is disposed between the light emission body and the light emission cover or between the light source and the light source lens.

The light source module further includes a second reducer lens spaced apart from the first reducer lens and configured to reduce a width of light emitted by the first reducer lens, and the second reducer lens is disposed between the light emission body and the light emission cover or between the first reducer lens and the light source lens.

The light source body may further include a first reducer stopping protrusion and a first reducer fixing protrusion, and the first reducer lens may be disposed between the first reducer stopping protrusion and the first reducer fixing protrusion.

The first reducer stopping protrusion may be disposed in front of the first reducer lens.

The first reducer fixing protrusion may be disposed behind the first reducer lens.

The light emission cover may further include a first reducer stopping protrusion and a first reducer fixing protrusion, and the first reducer lens may be disposed between the first reducer stopping protrusion and the first reducer fixing protrusion.

The first reducer stopping protrusion may be disposed in front of the first reducer lens.

The first reducer fixing protrusion may be disposed behind the first reducer lens.

The light emission body may further include a second reducer stopping protrusion and a second reducer fixing protrusion, and the second reducer lens amy be disposed between the second reducer stopping protrusion and the second reducer fixing protrusion.

The second reducer stopping protrusion may be disposed in front of the second reducer lens.

The second reducer fixing protrusion may be disposed behind the second reducer lens.

The light emission cover may further include a second reducer stopping protrusion and a second reducer fixing protrusion, and the second reducer lens may be disposed betwee the second reducer stopping protrusion and the second reducer fixing protrusion.

The second reducer stopping proturison may be disposed in front of the second reducer lens.

The second reducer fixing protrusion may be disposed behind the second reducer lens.

An optical axis of the first reducer lens and an optical axis of the second reducer lens may coincide with each other.

The optical axis of the first reducer lens and the optical axis of the second reducer lens may be spaced apart from each other.

The optical axis of the second reducer lens and the optical axis of the light soruce lens may be spaced apart from each other.

A thickness of the second reducer lens may be thinner than a thickness of the first reducer lens.

The first reducer lens may have a convex light entrance surface on which light is to be incident.

The second reducer lens may have a concave light exit surface from which light is to exit.

The light emission tail part may include a light source insertion hole that penetrates the flange section, and the light source may be inserted into the light source insertion hole and disposed between the light emission body and the light emission cover.

The light source may include a light emitter and a base portion, and the light emission head part may further include a stopping protrusion formed along an inner circumferential surface of the light source insertion hole. When the light source is inserted into the light source insertion hole, a front surface of the base portion may be stopped by the stopping protrusion and a rear surface of the base portion may be exposed outside the light emission head part.

The dissipation module may include a heat pipe in contact with at leat part of the rear surface of the base portion.

The dissipation module may further include a dissipation plate in contact with the heat pipe.

The dissipation plate may include: a fixing part fixd to the flange section; and a pressing part pressing the heat pipe. The heat pipe may be fixed between the flange section and the pressing part.

The light function module may further include a fastening member that penetrates the flange section and the pressing part.

The dissipation module may include: a heat pipe in contact with a part of the rear surface of the base portion; and a dissipation plate in contact with the heat pipe. The dissipation plate may include a light source pressing part in contact with the part of the rear surface of the base portion.

The heat pipe may further include an extension part bent toward a rear of the light emission body.

The dissipation module may further include a sub-dissipation plate in contact with the extension part.

According to embodiments of the present invention, by using the same component for a light source module and a dissipation module, which are common among a plurality of light function modules, it is possible to minimize the number of components and improve productivity.

In addition, by replacing a light distribution module coupled to the light source module, it is possible to provide a light function module able to perform a different function.

The embodiments will be described in detail with reference to the following drawings in which like reference numerals refer to like elements wherein:
FIG. 1 is a perspective view of a light lamp for vehicle according to an embodiment of the present invention;
FIG. 2 is a perspective view illustrating the interior of the light lamp shown in FIG. 1;
FIG. 3 is a perspective view of first and second light function modules shown in FIG. 2;
FIG. 4 is an exploded perspective view of the first and second light function modules shown in FIG. 3;
FIG. 5 is a perspective view of a light distribution module, shown in FIG. 3, which is detached from a light source module;
FIG. 6 is the perspective view of FIG. 5, as viewed from a different direction;
FIG. 7 is a perspective view of a third light function module shown in FIG. 2;
FIG. 8 is an exploded perspective view of the third light function module shown in FIG. 7;
FIG. 9 is a perspective view of a light distribution module, shown in FIG. 7, which is detached from a light source device;
FIG. 10 is the perspective view of FIG. 9, as viewed from a different direction;
FIG. 11 is an exploded perspective view of a light source module according to a first embodiment of the present invention;
FIG. 12 is an exploded perspective view of the light source module of FIG. 11, as viewed from a different direction;
FIG. 13 is a front view of a light emission body of the light source module according to the first embodiment of the present invention;
FIG. 14 is a cross-sectional view taken along line Q-Q of FIG. 3;
FIG. 15 is a cross-sectional view taken along line R-R of FIG. 3;
FIG. 16 is a configuration diagram of an optical system of the light source module according to the first embodiment of the present invention;
FIG. 17 is a diagram illustrating an optical path of the optical system shown in FIG. 16;
FIG. 18 is an exploded perspective view of a light distribution module and a light source module shown in FIG. 9;
FIG. 19 is a cross-sectional view taken along line T-T of FIG. 7;
FIG. 20 is a cross-sectional view taken along line V-V of FIG. 7;
FIG. 21 is a configuration diagram of an optical system of the light distribution module and the light source module shown in FIG. 7;
FIG. 22 is a diagram illustrating an optical path of the optical system shown in FIG. 21;
FIG. 23 is a perspective view of light function modules included in a light lamp for vehicle according to a second embodiment of the present invention;
FIG. 24 is a perspective view of light function modules including a light lamp for vehicle according to a third embodiment of the present invention;
FIG. 25 is a perspective view of light function modules included in a light lamp for vehicle according to a fourth embodiment of the present invention;
FIG. 26 is a perspective view of light function modules included in a light lamp for vehicle according to a fifth embodiment of the present invention;
FIG. 27 is a perspective view of light function modules included in a light lamp for vehicle according to a sixth embodiment of the present invention;
FIG. 28 is a perspective view of a shield retainer assembly included in a light lamp for vehicle according to a seventh embodiment of the present invention;
FIG. 29 is a perspective view of a shield retainer assembly included in a light lamp for vehicle according to an eighth embodiment of the present invention;
FIG. 30 is an exploded perspective view of a light distribution module included in a light lamp for vehicle according to a ninth embodiment of the present invention; and
FIG. 31 is a cross-sectional view of a third light distribution module according to a tenth embodiment of the present invention.

Hereinafter, embodiments of the present invention will be described in detail with reference to the accompanying drawings.

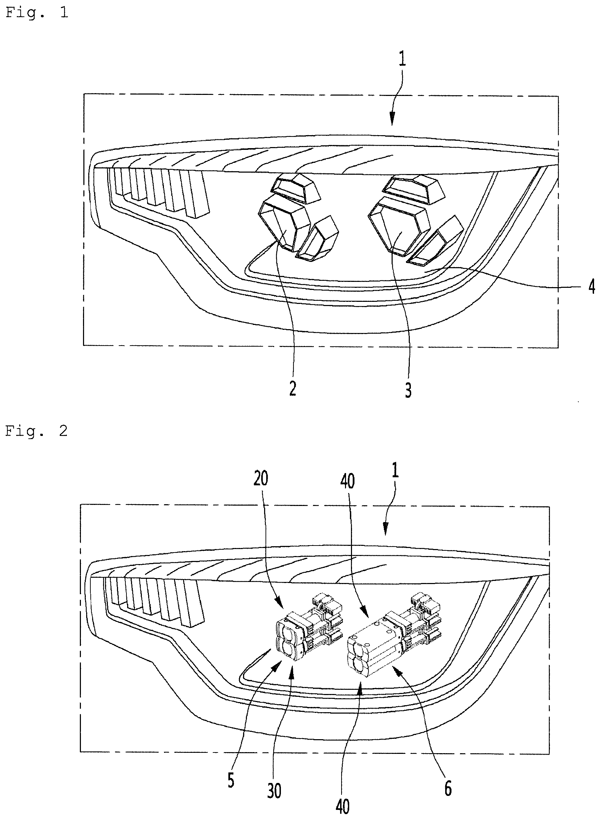

FIG. 1 is a perspective view of a light lamp for vehicle according to an embodiment of the present invention, and FIG. 2 is a perspective view illustrating the interior of the light lamp shown in FIG. 1.

As illustrated in FIG. 1, a light lamp 1 for vehicle according to an embodiment of the present invention may include at least one inner lens 2 or 3 and an outer lens disposed in front of the inner lens 2 or 3.

A plurality of inner lens 2 and 3 may be provided inside the light lamp 1. The plurality of inner lens 2 and 3 may be disposed behind the outer lens 4.

The outer lens 4 may be larger than the plurality of inner lens 2 and 3, and may be disposed in front of the plurality of inner lens 2 and 3 to protect the plurality of inner lens 2 and 3.

The plurality of inner lens 2 and 3 may be spaced apart from each other behind the outer lens 4. The plurality of inner lens 2 and 3 may be spaced apart from each other in a horizontal or vertical direction.

As illustrated in FIG. 2, the light lamp 1 may include at least one light module 5 or 6. A plurality of light modules 5 and 6 may be provided inside the light lamp 1. The plurality of light modules 5 and 6 may be spaced apart from each other.

The light lamp 1 includes a plurality of light function module 20, 30, and 40.

The plurality of light function modules 20, 30, and 40 includes a first light function module 20 and a second light function module 30. The plurality of light function module 20, 30, and 40 may further include a third light function module 40.

At least one module 20 or 30 among the plurality of light function modules 20, 30, and 40 may have a function different from that of another module 40. At least two light function modules 40 among the plurality of light function modules 20, 30, and 40 may have the same function.

The light lamp 1 may include at least one high beam module, at least one booster module, and at least one low beam module.

The first light function module 20, the second light function module 30, and the third light function module 40 may consist of a high beam module for emitting a high beam, a booster module for reinforcing light emitted by the high beam module, and a low beam module for emitting a low beam.

The light lamp 1 may be configured such that the number of one module type among the first light function modules 20, the second light function modules 30, and the third light function modules 40 is greater than the number of another module type.

The light lamp 1 may include a single first light function module 20, a single second light function module 30, and a plurality of third light function modules 40.

The light lamp 1 may include a light module 5 which is formed as the first light function module 20 and the second light function module 30 are coupled to each other. In addition, the light lamp 1 may include another light module 6 which is formed as the plurality of third light function modules 40 are coupled to one another.

In this case, one light module 5 which is a combination of the first function module 20 and the second light function module 30 may be spaced apart from another light module 6 which is a combination of the plurality of third light function modules 40.

For example, the first light function module 20 may be implemented as a high beam module for emitting a high beam, the second light function module 30 may be implemented as a booster beam module for emitting a booster beam, and each third light function module 40 may be implemented as a low beam module. In addition, the plurality of third light function modules 40 may be spaced apart from the first light function module 20 and the second light function module 30 and arranged in a vertical direction.

A third light function module 40 disposed higher than other third light function module(s) 40 may be horizontally spaced apart from a light function module which is disposed higher between the first light function module 20 and the second light function module 30.

In addition, a third light function module 40 positioned lower than other third light function module(s) 40 may be horizontally spaced apart from a light function module which is positioned lower than the other among the first light function module 20 and the second light function module 30.

The lighting lamp for vehicle may be configured with inner lenses 2 and 3 which are provided less than the plurality of light function modules 20, 30, and 40.

The inner lenses 2 and 3 may be disposed in front of the plurality of light function modules 20, 30, and 40. The inner lenses 2 and 3 may be disposed to face light distribution modules of at least two light function modules among the plurality of light function modules 20, 30, and 40.

One of the plurality of inner lenses 2 and 3 may be disposed in front of the first light function module 20 and the second light function module 30, and a beam emitted by the second light function module 30 may pass through one of the plurality of inner lenses 2 and 3 together with a beam emitted by the first light function module 20.

In addition, the other one of the inner lenses 2 and 3 may be disposed in front of the plurality of third light function modules 40, and respective beams emitted by the plurality of third light function modules 40 may pass through the other inner lens 2 or 3 simultaneously or at intervals.

In the case where two inner lenses 2 and 3 are disposed behind the outer lens 4, a first inner lens and a second inner lens may be spaced apart from each other. In this case, the first inner lens may be disposed in front of the first light function module 20 and the second light function module 30. In addition, the second inner lens may be disposed in front of the plurality of third light function modules 40.

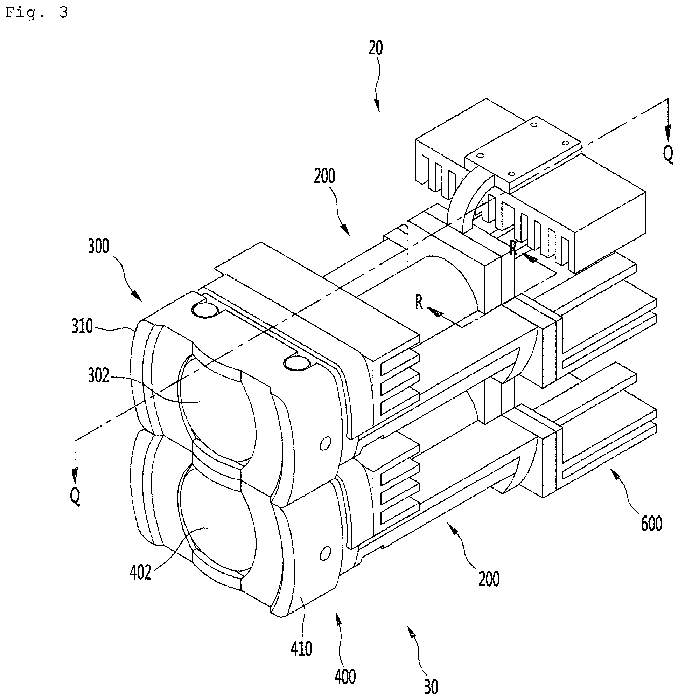

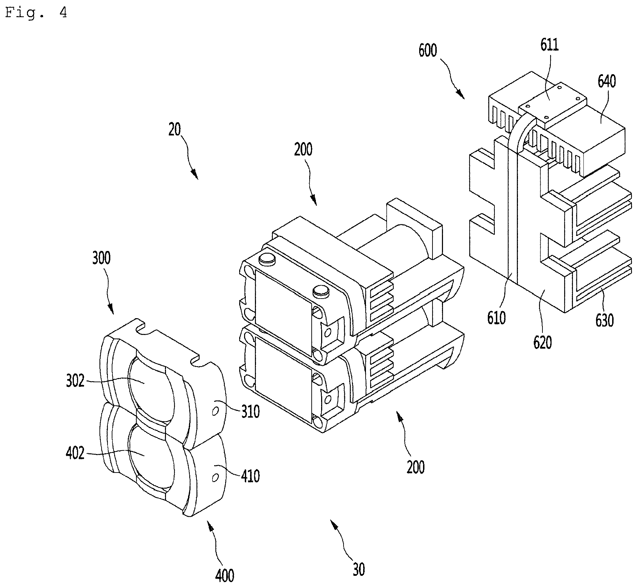

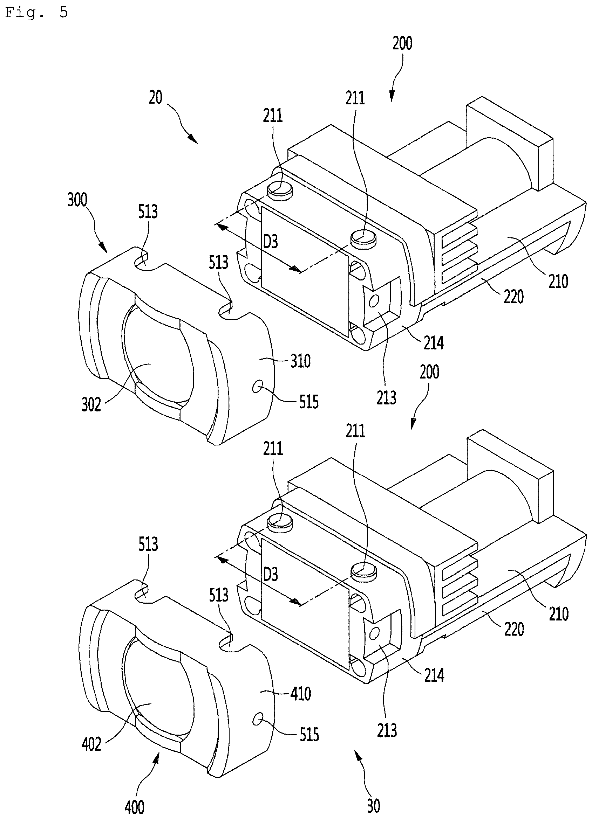

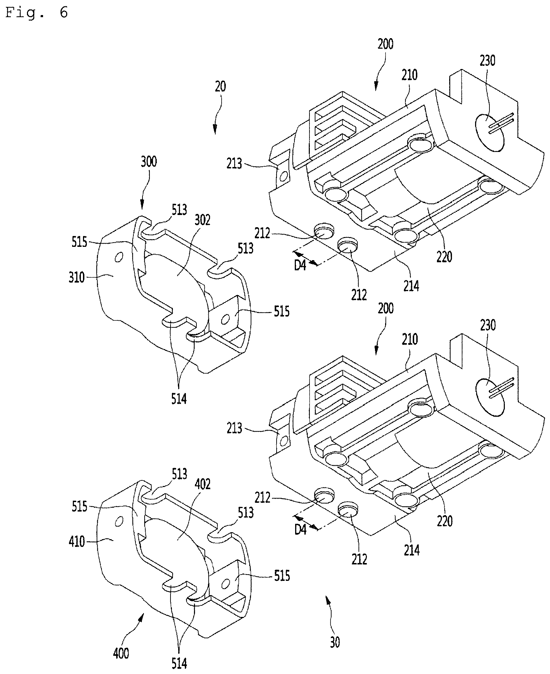

FIG. 3 is a perspective view of first and second light function modules shown in FIG. 2; FIG. 4 is an exploded perspective view of the first and second light function modules shown in FIG. 3; FIG. 5 is a perspective view of a light distribution module, shown in FIG. 3, which is detached from a light source module; and FIG. 6 is the perspective view of FIG. 5, as viewed from a different direction.

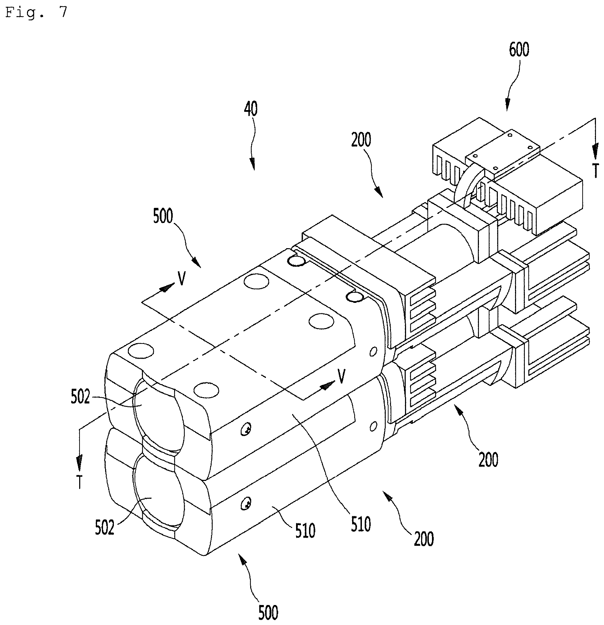

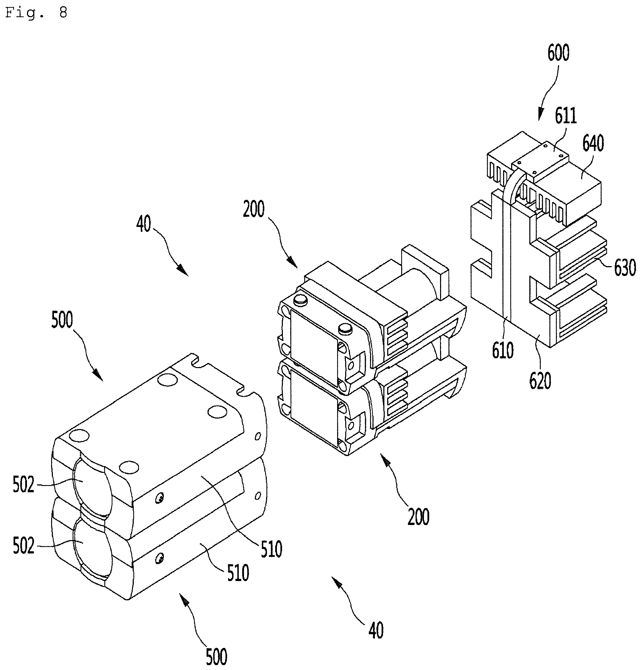

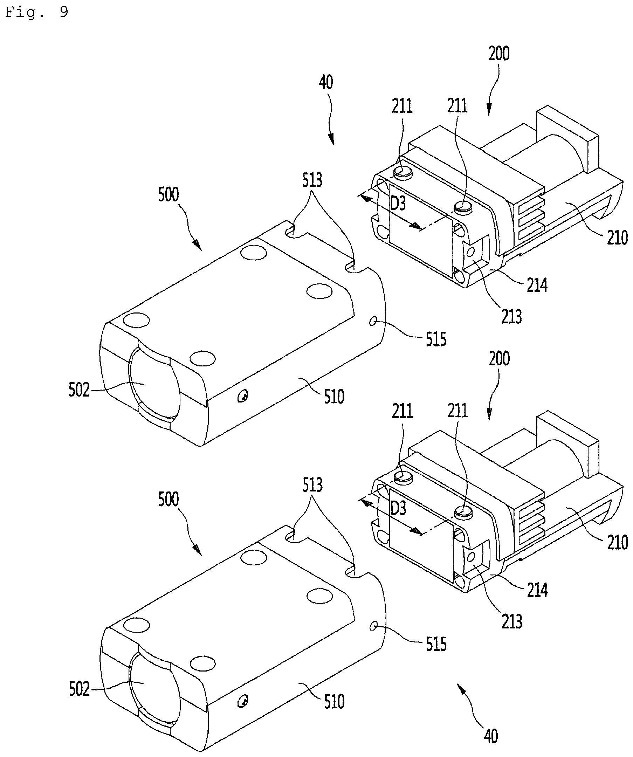

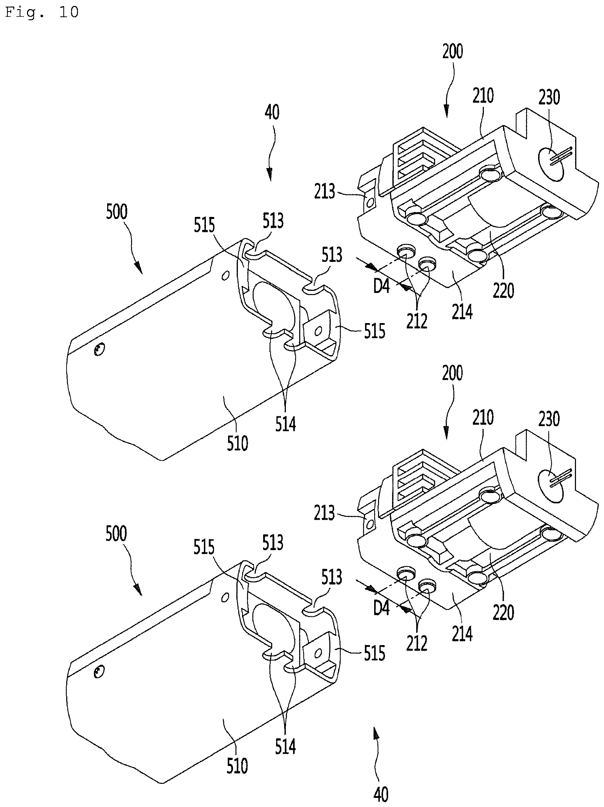

In addition, FIG. 7 is a perspective view of a third light function module shown in FIG. 2; FIG. 8 is an exploded perspective view of the third light function module shown in FIG. 7; FIG. 9 is a perspective view of a light distribution module, shown in FIG. 7, which is detached from a light source device; and FIG. 10 is the perspective view of FIG. 9, as viewed from a different direction.

The plurality of light function modules 20, 30, and 40 each include a light source module 20, a light distribution module, and a dissipation module 600.

The light source module 200 may emit light toward the light distribution module.

The light distribution module is disposed in front of the light source module 200, and distribute the light emitted by the light source module 200. The light distribution module may distribute light, which is incident from the light source module 200, into various patterns. The light distribution module may be distinguished by a pattern in which the light distribution module distributes light. Being coupled to the light source module 200, the light distribution module may function as a high beam or a low beam.

The light distribution module may include a projection lens, and a light distribution case having a projection lens accommodating space.

The projection lens may be mounted in the projection lens accommodating space. The projection lens may have a convex front surface.

The light distribution case may have a light emission opening formed at the front thereof. At least part of the front surface of the projection lens may be exposed outside the light distribution case by the opening to the outside.

The light distribution module may further include a projection lens retainer for fixing the projection lens onto the light distribution case. The projection lens retainer may be coupled to a rear surface of the light distribution case.

The light distribution module may further include a diffuser disposed behind the projection lens retainer. The diffuser may face a rear surface of the projection lens.

The light distribution module may be coupled to at least one of the light source module 200 and the dissipation module 600, or may compose light function modules, together with the light source module 200 and the dissipation module 600.

A function of each of the plurality of light function modules 20, 30, and 40 may be determined depending on a light distribution module disposed in front of the light source module 200.

The lighting lamp for vehicle may include three types of the light distribution module 300, 400, and 500. The lighting lamp for vehicle may include a first light distribution module 300, a second light distribution module 400, and a third light distribution module 500. The first light distribution module 300, the second light distribution module 400, and the third light distribution module 500 may be respectively coupled to the light source module 200.

The first light distribution module 300, the second light distribution module 400, and the third light distribution module 500 may have different light distribution patterns.

As illustrated in FIGS. 3 to 6, the first light function module 20 may include a first light distribution case 310 into which a first projection lens 302 is mounted. In addition, the second light function module 30 may include a second light distribution case 410 into which a second projection lens 402 is mounted.

The first projection lens 302 and the second projection lens 402 may have different curvature, and the first light function module 20 and the second light function module 30 may form different light distribution patterns. The light distribution area of the first light function module 20 may be larger than that of the second light function module 30. The light distribution area of the second light function module 30 may overlap a part of the light distribution area of the first light function module 20.

As illustrated in FIGS. 7 to 10, the third light function module 40 may include a third light distribution case 510 into which a third projection lens 502 is mounted. A shield may be embedded in the third light function module 40, and a low beam may be formed according to the cut-off line of an opening formed in the shield.

According to a function of a light function module, a light distribution module may be the first light distribution module 300 for emitting a high beam, the second light distribution module 400 for emitting a booster beam, or the third light distribution module 500 for emitting a low beam.

A common-type light source module 200 and a common-type dissipation module 600 may be used. The first light distribution module 300, the second light distribution module 400, and the third light distribution module 500 may be different from each other.

As the common-type light source module 200 and the common-type dissipation module 600 are able to be used, it is possible to reduce costs for manufacturing facilities.

The first light distribution module 300, the second light distribution module 400, and the third light distribution module 500 may be selectively used for the plurality of light function modules 20, 30, and 40.

For example, the first light distribution module 300 may be connected to at least one of the light source module 200 and the dissipation module 600 to thereby function as the first light function module 20. In addition, the second light distribution module 400 may be connected to at least one of the light source module 200 and the dissipation module 600 to thereby function as the second light function module 30. In addition, the third light distribution module 500 may be connected to at least one of the light source module 200 and the dissipation module 600 to thereby function as the third light function module 40.

Each of the first light distribution module 300, the second light distribution module 400, and the third light distribution module 500 may be coupled to the light source module 200 in the same structure.

As illustrated in FIGS, 5, 6, 9, and 10, a top-surface protrusion 211, a bottom-surface protrusion 212, and a side-surface groove 213 may be formed in the light source module 200.

In addition, as illustrated in FIGS. 5 and 6, a top-surface groove 513, a bottom-surface groove 514, and a side-surface protrusion 515 may be formed in each of the first light distribution module 300 and the second light distribution module 400. As illustrated in FIGS. 9 and 10, a top-surface groove 513, a bottom-surface groove 514, and a side-surface protrusion 515 may be formed in the third light distribution module 500.

The light source module 200 includes a light emission body 210 in which the top-surface protrusion 211, the bottom-surface protrusion 212, and the side-surface groove 213 are formed. A light emission head part 214 is formed at the front of the light emission body 210. The top-surface protrusion 211, the bottom-surface protrusion 212, and the side-surface groove 213 may be formed in the light emission head part 214.

The top-surface protrusion 211 may be formed in a top surface of the light emission head part 214. There may be provided a plurality of top-surface protrusions 211 being spaced apart from each other.

The bottom-surface protrusion 212 may be formed in a bottom surface of the light emission head part 214. There may be provided a plurality of bottom-surface protrusions 212 being spaced apart from each other.

The side-surface groove 213 may be fromed in a side surface of the light emission head part 214. There may be provided a plurality of side-surface grooves 213 spaced apart from each other.

Two top-surface protrusions 211 and two bottom-surface protrusions 212 may be formed.

A distance D3 between the two top-surface protrusions 211 and a distance D4 between the two bottom-surface protrusions 212 may be different from each other. In doing so, it is possible to prevent that the first light distribution module 300, the second light distribution module 400, and the third light distribution module 500 are assembled upside down.

The top-surface groove 513, the bottom-surface groove 514, and the side-surface protrusion 515 may be formed in the first light distribution case 310 of the first light distribution module 300, the second light distribution case 410 of the second light distribution module 400, and the third light distribution case 510 of the third light distribution module 500.

With reference to FIGS. 3 to 6, a structure coupling the first light distribution module 300 and the light source module 200 is hereinafter described.

At least part of a light source module 200 included in the first light function module 20 may be inserted into the first light distribution module 300. At least part of the light emission body 210 of the light source module 200 included in the first light function module 20 may be inserted into the rear of the first light distribution case 310.

A top-surface groove 513 may be formed in a top surface of the first light distribution case 310. A plurality of top-surface grooves 513 may be formed in the top surface of the first light distribution case 310 and spaced apart from each other. The top-surface protrusion 211 of the light source module 200 included in the first light function module 20 may be fitted into the top-surface groove 513 of the first light distribution case 310 thereby to be engaged therewith.

A bottom-surface groove 514 may be formed in a bottom surface of the first light distribution case 310. A plurality of bottom-surface grooves 514 may be formed in the bottom surface of the first light distribution case 310 and spaced apart from each other. The bottom-surface protrusion 212 of the light source module 200 included in the first light function module 20 may be fitted into the bottom-surface groove 514 of the first light distribution case 310 thereby to be engaged therewith.

A side-surface protrusion 515 may be formed in a side surface of the first light distribution case 310. A plurality of side-surface protrusions 515 may be formed in side surfaces of the first light distribution case 310, and may be respectively formed in one side surface and the other side surface of the first light distribution case 310 and thus spaced apart from each other. The side-surface protrusion 515 may be fitted into the side-surface groove 213 of the light source module 200 included in the first light function module 20 thereby to be engaged therewith.

The first light distribution module 300 may be coupled to the light source module 200 included in the first light function module 20 through a fastening member (not shown) which penetrates the side-surface protrusion 515 and the side-surface groove 213.

In addition, with reference to FIGS. 3 to 6, a structure coupling the second light distribution module 400 and the light source module 200 is hereinafter described.

At least part of a light source module 200 included in the second light function module 30 may be inserted into the second light distribution module 400. At least part of the light emission body 210 of the light source module 200 included in the second light function module 300 may be inserted into the rear of the second light distribution case 410.

A top-surface groove 513 may be formed in a top surface of the second light distribution case 410. A plurality of top-surface groove 513 may be formed in the top surface of the second light distribution case 410 and spaced apart from each other. The top-surface protrusion 211 of the light source module 200 included in the second light function module 30 may be fitted into the top-surface groove 513 thereby to be engaged therewith.

A bottom-surface groove 514 may be formed in a bottom surface of the second light distribution case 410. A plurality of bottom-surface grooves 514 may be formed in the bottom surface of the second light distribution case 410 and spaced apart from each other. The bottom-surface protrusion 212 of the light source module 200 included in the second light function module 30 may be fitted into the bottom-surface groove 514 thereby to be engaged therewith.

A side-surface protrusion 515 may be formed in a side surface of the second light distribution case 410. A plurality of side-surface protrusions 515 may be formed in side surfaces of the second light distribution case 410, and may be respectively formed in one side surface and the other side surface of the second light distribution case 410 and thus spaced apart from each other. The side-surface protrusion 515 may be fitted into the side-surface groove 213 of the light source module 200 included in the second light function module 30 thereby to be engaged therewith.

The second light distribution module 400 may be coupled to the light source module 200 through a fastening member (not shown) which penetrates the side-surface protrusion 515 and the side-surface groove 213.

With reference to FIGS. 7 to 10, a structure coupling the third light distribution module 500 and the light source module 200 is hereinafter described.

At least part of a light source module 200 included in the third light function module 40 may be inserted into the third light distribution module 500. At least part of the light emission body 210 of the light source module 200 included in the third light function module 40 may be inserted into the rear of the third light distribution case 510.

A top-surface groove 513 may be formed in a top surface of the third light distribution case 510. A plurality of top-surface grooves 513 may be formed in the top surface of the third light distribution case 510 and spaced apart from each other. The top-surface protrusion 211 of the light source module 200 included in the third light function module 40 may be fitted into the top-surface groove 513 thereby to be engaged therewith.

A bottom-surface groove 514 may be formed in a bottom surface of the third light distribution case 510. A plurality of bottom-surface grooves 514 may be formed in the bottom surface of the third light distribution case 510 and spaced apart from each other. The bottom-surface protrusion 212 of the light source module 200 included in the third light function module 40 may be fitted into the bottom-surface groove 514 thereby to be engaged therewith.

A side-surface protrusion 515 may be formed in a side surface of the third light distribution case 510. A plurality of side-surface protrusions 515 may be formed in side surfaces of the third light distribution case 510, and may be respectively formed in one side surface and the other side surface of the third light distribution case 410 and thus spaced apart from each other. The side-surface protrusion 515 may be fitted into the side-surface groove 213 of the light source module 200 included in the third light function module 40 thereby to be engaged therewith.

The third light distribution module 500 may be coupled to the light source module 200 through a fastening member (now shown) which penetrates the side-surface protrusion 515 and the side-surface groove 213.

Meanwhile, the dissipation module 600 may be connected to the light source module 200 to dissipate heat of the light source module 200. The dissipation module 600 is disposed at the rear of the light source module 200 so as to dissipate heat generated by a light source 230 of the light source module 200. The light source 230 will be described later.

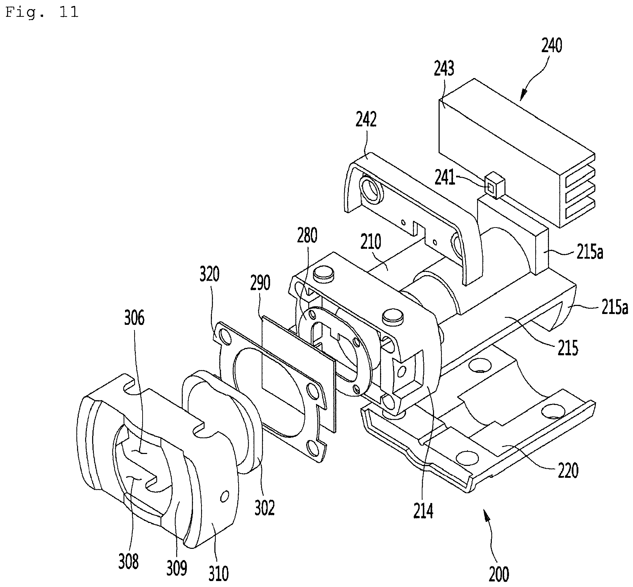

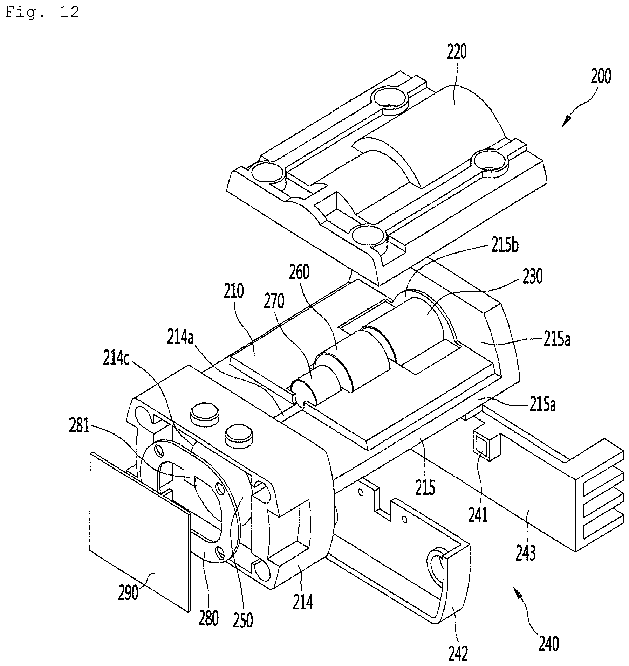

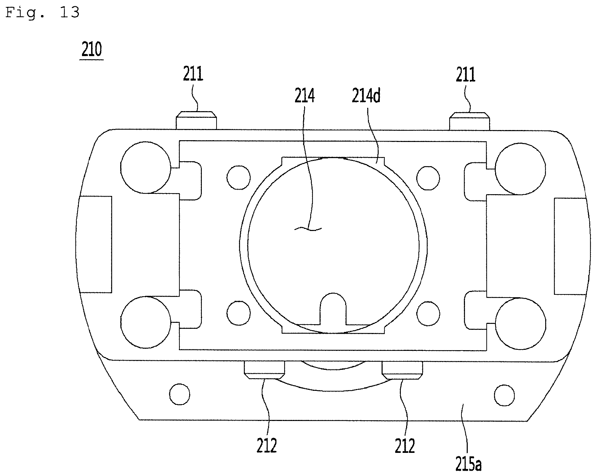

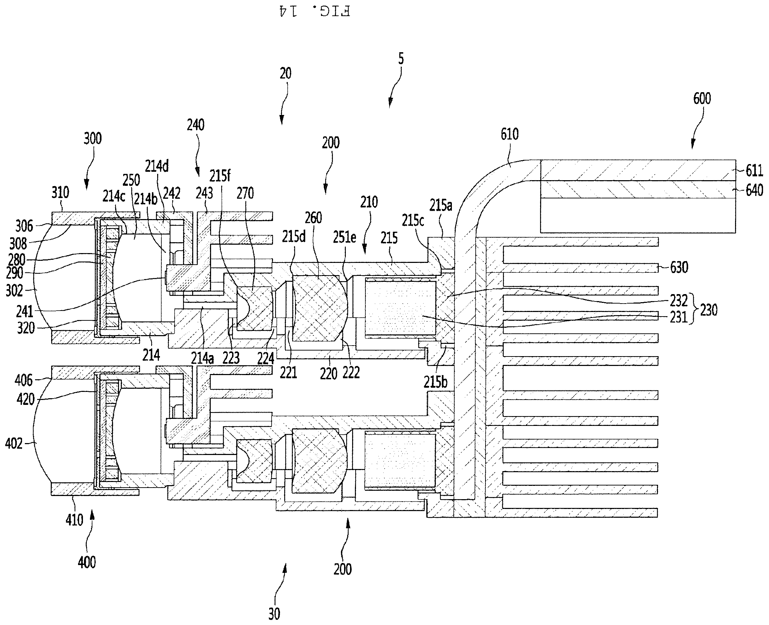

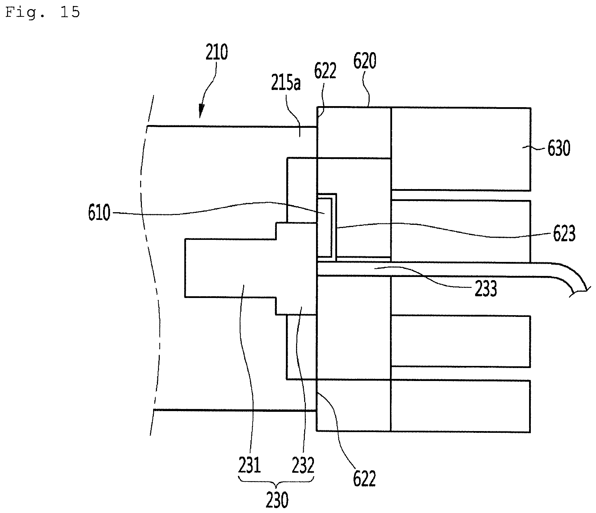

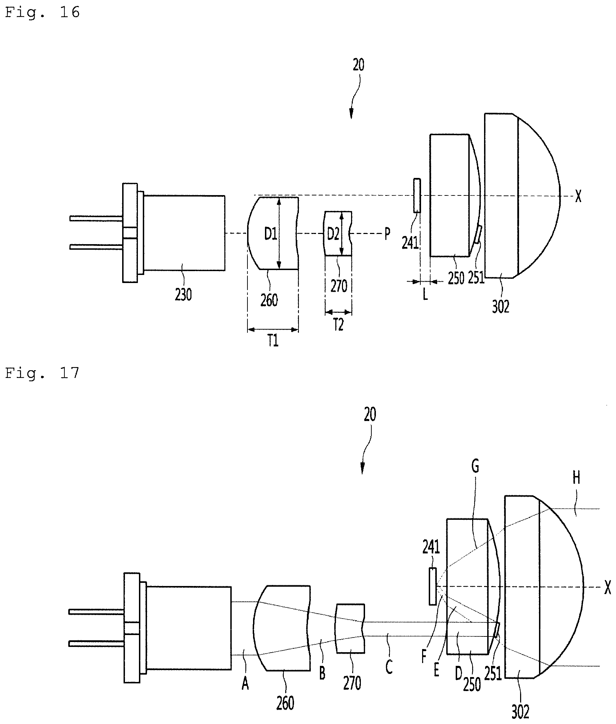

FIG. 11 is an exploded perspective view of a light source module according to a first embodiment of the present invention; FIG. 12 is an exploded perspective view of the light source module of FIG. 11, as viewed from a different direction; FIG. 13 is a front view of a light emission body of the light source module according to the first embodiment of the present invention; FIG. 14 is a cross-sectional view taken along line Q-Q of FIG. 3; FIG. 15 is a cross-sectional view taken along line R-R of FIG. 3; FIG. 16 is a configuration diagram of an optical system of the light source module according to the first embodiment of the present invention; and FIG. 17 is a diagram illustrating an optical path of the light source module according to the first embodiment of the present invention.

A first light function module 20 out of a plurality of light function modules includes a first light distribution module 300, a light source module 200, and a dissipation module 600.

In addition, a second light function module 20 out of the plurality of light function modules includes a second light distribution module 400, a light source module 200, and a dissipation module 600.

A common-type light source module 200 may be used, regardless of respective types of the plurality of light function modules, and the light source module 200 will be hereinafter described.

The light source module 200 includes a light source 230; a light source lens 250; a light emission body 210 accommodating the light source 230 and the light source lens 250; a light emission cover 220 covering the light emission body 210; and a phosphor assembly 240 connected to the light emission body 210. In addition, the light source module 200 includes a reflection unit 251 which reflects light, passing through the light source lens 250, toward the light source lens 250. The reflection unit 251 may be provided to reflect incident light toward a phosphor 241 of the phosphor assembly 240. The reflection unit 251 is disposed at the front of the light source lens 250. The reflection unit 251 may be integrated with the light source lens 250 or spaced apart from the light source lens 250.

The light source 230 may receive electrical energy and convert the electrical energy into optical energy, and may be a light-emitting source, such as an ultra high voltage (UHV) mercury lamp, a light-emitting diode (LED), or a laser diode.

It is preferable that the light source 230 has excellent straightness and high efficiency and enables long-distance irradiation. The light source 230 is preferably a laser diode. It is preferable that the laser diode used as the light source 230 emits a blue-based laser beam having high efficiency.

The light source 230 may emit light toward the reflection unit 251. The light source 230 may emit light toward the light source lens 250, and the light emitted toward the light source lens 250 may pass through the light source lens 250 and be then incident on the reflection unit 251. The light source 230 may emit light toward the rear surface of the light source lens 250, and the light incident on the rear surface of the light source lens 250 from the light source 230 may pass through the light source lens 250 and be then incident on the rear surface of the reflection unit 251.

The light source 230 is connected to the dissipation module 600 which dissipates heat generated by the light source 230.

Between the light source 230 and the light source lens 250, there is a light reducer which reduces the size of light emitted by the light source 230 and then emits the light toward the reflection unit 251. The light emitted by the light source 230 may pass through the light reducer and be then emitted toward the reflection unit 251.

The light reducer includes a plurality of reducer lenses. The plurality of reducer lenses includes a first reducer lens 260 and a second reducer lens 270.

The light source lens 250 is disposed before the light source 230. The reflection unit 251 may be provided on a part of the front surface of the light source lens 250.

The light emission cover 220 covers the light emission body 210. The light emission body 210 accomodates the light source 230, the light source lens 250, the first reducer lens 260, and the second reducer lens 270.

The light emission body 210 and the light emission cover 220 may form a light source accommodating space in which the light source 230 is accommodated. The light source 230 may be inserted into the light source accommodating space and accommodated therein.

The light emission body 210 and the light emission cover 220 may form a light source lens accommodating space in which the light source lens 250 is accommodated. The light source lens 250 may be inserted into the light source lens accommodating space and accommodated therein.

The light emission body 210 and the light emission cover 220 may form a first reducer lens accommodating space in which the first reducer lens 260 is accommodated. The first reducer lens 260 may be inserted into the first reducer lens accommodating space and accommodated therein.

The light emission body 210 and the light emission cover 220 may form a second reducer lens accommodating space in which the second reducer lens 270 is accommodated. The second reducer lens 270 may be inserted into the second reducer lens accommodating space and accommodated therein.

The light emission body 210 includes a light emission head part 214 in which the light source lens 250 is mounted; and a light emission tail part 215 connected to the rear of the light emission head part 214. A light entrance hole 214a and a phosphor assembly coupling hole 241b are formed at the rear of the light emission head part 214.

The phosphor assembly 240 is coupled to the rear of the light emission head part 214 and covers the phosphor assembly coupling hole 214b.

The light emission cover 220 may be coupled to the light emission body 210 so as to cover the light emission tail part 215.

In the case where a light source lens insertion hole 214c is formed at the front of the light emission head part 214 and the light source lens 250 is mounted in the light source lens insertion hole 214c, the front surface of the light source lens 250 may be exposed outside the light emission head part 214.

The light emission head part 214 may include a light source lens stopping protrusion 214d formed along an inner circumferential surface of the light source lens insertion hole 214c. In addition, the rear surface of the light source lens 250 may come into contact with the light source lens stopping protrusion 214d.

The light source module 200 may be coupled to the front surface of the light emission head part 214. The light source module 200 may further include a light source lens retainer 280 for fixing the light source lens 250 to the light emission head part 214. The light source lens retainer 280 may be coupled to the light emission head part 214 through a fastening member.

The light source lens retainer 280 coupled to the light emission head part 214 may be disposed to contact the front surface of the light source lens 250. The light source lens retainer 280 may press the front surface of the light source lens 250.

The light source lens 250 may be disposed between the light source lens stopping protrusion 214d and the light source lens retainer 280. Being disposed between the light source lens stopping protrusion 214d and the light source lens retainer 280, the light source lens 250 may be fixed or constrained in a longitudinal direction of the light emission body 210.

The light source lens retainer 280 may include a light blocking section 281 which faces at least part of the front surface of the light source lens 250.

In the case where the reflection unit 251 is provided on the front surface of the light source lens 250, the light blocking section 281 may be disposed to face the reflection unit 251. Light emitted by the light source 230 may be reflected by the reflection unit 251. However, light scattered or diffusely-reflected by the reflection unit 251 may not be incident on the phosphor 241 but may be emitted toward the front of the light source lens 250. In this case, the light blocking section 281 of the light source lens retainer 280 may block the light reflected by the reflection unit 251, not the light reflected by the phosphor 241. That is, the light blocking section 281 may block light which is emitted toward the front of the light source lens 250 without passing through the phosphor 241.

The light source lens 250 may be formed larger than the phosphor 241 and the reflection unit 251. In addition, the light source lens 250 may be disposed in front of the phosphor 241 to protect both the phosphor 241 and the reflection unit 251.

The light source lens 250 may have a circular or polygonal shape. The light source lens 250 may include a front surface, a rear surface, and a circumferential surface.

The front surface of the light source lens 250 may be a curved surface that is convex toward the front of the light source lens 250. The rear surface of the light source lens 250 may be a flat surface or a curved surface that is concave toward the front of the light source lens 250.

The light source lens 250 may have an optical axis X. The light source lens 250 may be a condenser lens having a convex front surface, and the front surface of the light source lens 250 may be symmetrical with reference to the optical axis X. The optical axis X of the light source lens 250 may be a rotation symmetry axis or a central axis of the light source lens 250 and may mean a straight line passing through the center of the front surface of the light source lens 250 and the center of the rear surface of the light source lens 250.

The phosphor 241 is disposed behind the light source lens 250 and converts a wavelength of light reflected by the reflection unit 251 and reflect the wavelength-converted light toward the light source lens 250. That is, the phosphor 241 may be a reflective phosphor 241.

Since heat may be generated during the wavelength conversion of the light, the phosphor 241 is preferably spaced apart from the light source lens 250. The phosphor 241 may be disposed behind the light source lens 250 and spaced apart from the light source lens 250.

The phosphor 241 is disposed to face the rear surface of the light source lens 250 and may reflect light toward the rear surface of the light source lens 250.

The phosphor 241 may be disposed on the optical axis X of the light source lens 250 and spaced apart from the rear surface of the light source lens 250. The front surface of the phosphor 241 may be in parallel to the rear surface of the light source lens 250.

The phosphor 241 may be disposed eccentric with respect to the optical axis X of the light source lens 250. However, in this case, the efficiency is low because a region of the light source lens 250 through which the light reflected by the phosphor 241 passes is smaller than the case where the phosphor 241 is disposed on the optical axis X of the light source lens 250.

It is preferable that the phosphor 241 is disposed on the optical axis X of the light source lens 250.

The phosphor 241 may include a wavelength conversion layer disposed to face the rear surface of the light source lens 250, and a phosphor reflection unit disposed at the rear of the wavelength conversion layer.

The wavelength conversion layer may be a wavelength conversion film and may include an opto ceramic. The wavelength conversion layer may be disposed in front of the reflection unit and convert a wavelength of light reflected by the reflection unit. The wavelength conversion layer may be a wavelength conversion film that converts blue-base light, which is incident from the outside, into yellow-based light. The wavelength conversion layer may include a yellow-based opto ceramic.

The phosphor reflection unit may include a plate and a reflective coating layer coated on an outer surface of the plate. The plate may be made of metal. The phosphor reflection unit may support the wavelength conversion layer, and light passing through the wavelength conversion layer may be reflected by the phosphor reflection unit toward the rear surface of the light source lens 250.

When blue-based light is reflected by the phosphor reflection unit toward the phosphor 241, a part of the blue-based light is reflected from the surface of the wavelength conversion layer. In this case, the blue-based light incident into the wavelength conversion layer may be excited in the wavelength conversion layer, and such light may be reflected by the phosphor reflection unit toward the front of the wavelength conversion layer.

The blue-based light reflected from the surface of the wavelength conversion layer and the yellow-based light emitted toward the front of the wavelength conversion layer may be mixed together, and white-based light may be emitted toward the front of the phosphor 241. The white-based light may pass through the light source lens 250 and be then emitted toward the front of the light source lens 250.

Unlike a laser beam travelling in a straight line, the white-based light emitted toward the front of the phosphor assembly 240 is scattered radially. The light source lens 250 disposed in front of the phosphor assembly 240 may concentrate the scattered white-based light.

However, while light is scattered in the wavelength conversion layer of the phosphor 241, yellow-based light whose wavelength is converted is scattered widely more than blue-based light whose wavelength is not converted.

Due to the difference in scattering areas, there may be a region where the blue-based light is not mixed with the yellow-based light. As a result, a yellow ring may be generated around the white-based light by the non-integrated yellow-based light.

The yellow ring may deteriorate color purity of light emitted toward the front of the light source module 200.

The light source module 200 may be disposed in front of the light source lens retainer 280 and may further include a diffuser 290 which faces the front surface of the light source lens 250. By properly scattering light emitted by the light source lens 250, the diffuser 290 may minimize the yellow ring.

A front-to-rear width of the lighting lamp for vehicle may depend on a distance L between the phosphor 241 and the light source lens 250, and it is preferable that the phosphor 241 is disposed close to the light source lens 250 as long as thermal damage to the light source lens 250 can be minimized.

The phosphor assembly 240 may include a phosphor 241, a bracket 242, and a dissipation member 243. Light emitted by the light source 230 may be reflected by the reflection unit 251 and be then incident on the phosphor 241. Light may be concentrated in the phosphor 241, thereby generating heat. Thus, there is need for a structure that enables dissipating the heat generated in the phosphor 241. The dissipation member 243 may dissipate the heat generated in the phosphor 241. The phosphor 241 may be accommodated in the dissipation member 243. In another example, the phosphor 241 may be disposed to contact the dissipation member 243.

The dissipation member 243 may include a contact plate which comes into contact with the phosphor 241, and a dissipation pin which protrudes from the contact plate. The contact plate may be attached to the rear surface of the phosphor 241.

The bracket 242 may be connected to the dissipation member 243. The bracket 242 may be connected to the light emission body 210. The bracket 242 may connect the phosphor 241 and the dissipation member 243 to the light emission body 210.

The bracket 242 is fixed to the rear surface of the light emission head part 214, and the phosphor 241 is disposed to face the rear surface of light source lens 250. In addition, the phosphor 241 may be a reflective phosphor that converts a wavelength of light reflected by the reflection unit 251 and reflects the wavelength-converted light toward the light source lens 250. The phosphor 241 may be disposed on the optical axis of the light source lens 250. The phosphor assembly 240 includes: a phosphor 241 which converts a wavelength of incident light and reflects the wavelength-converted light; and a dissipation member 243 which comes in contact with the rear surface of the phosphor 241. The dissipation member 243 may be connected directly to a light emission body 210. In this case, the dissipation member 243 may act as a bracket 242. The light emission body 210 includes: a light emission head part 214 in which the light source lens 250 is mounted; and a light emission tail part 215 which is connected to the rear of the light emission head part 214. A light entrance hole 214a and a phosphor assembly coupling hole 214b are formed at the rear of the light emission head part 214. The dissipation member 243 may include: a dissipation body; and a phosphor holder which is connected to the dissipation body and comes into contact with the phosphor 241. The phosphor holder may be inserted into the phosphor assembly coupling hole 214b, the dissipation body may be connected to the rear surface of the light emission head part 214, and the phosphor 241 may be disposed in the phosphor holder to face the rear surface of the light source lens 250.

The position of the reflection unit 251 may depend on the position of the phosphor 241. In the case where the phosphor 241 is disposed behind the light source lens 250, the reflection unit 251 may be spaced apart from the light source lens 250 and behind the light source lens 250, may be provided on the rear surface of the light source lens 250, which does not form part of the invention. According to the invention, the reflection unit 251 is disposed in front of the light source lens 250. The reflection unit 251 may be provided on the front surface of the light source lens 250, or may be spaced apart from the light source lens 250.

When spaced apart from the light source lens 250 and behind the light source lens 250, the reflection unit 251 may reflect light, emitted by the light source 230, toward a space between the phosphor 241 and the light source lens 250.

When provided on the rear surface of the light source lens 250 and integrated with the light source lens 250, the reflection unit 251 may reflect light, emitted by the light source 230, toward a space between the phosphor 241 and the light source lens 250.

When provided on the front surface of the light source lens 250 and integrated with the light source lens 250, the reflection unit 251 may reflect light, emitted by the light source 230 and passing through the light source lens 250, toward the light source lens 250 so that the reflected light is reflected again toward the phosphor 241.

When spaced apart from the light source lens 250 and disposed in front of the light source lens 250, the reflection unit 251 may reflect light, emitted by the light source 230 and passing through the light source lens 250, toward the light source lens 250 so that the reflected light is reflected again toward the phosphor 241.

In the case the reflection unit 251 is disposed in front of or behind the light source lens 250 to be spaced apart from the light source lens 250, an increased number of components of the lighting lamp for vehicle may be required and the size of the lighting lamp may increase due to a distance between the light source lens 250 and the reflection unit 251.

It is preferable that the reflection unit 251 is integrated with the rear surface or the front surface of the light source lens 250 in order to make the lighting lamp compact with a minimum number of components.

In the case where the reflection unit 251 is provided on the entire rear surface or the entire front surface of the light source lens 250, the reflection unit 251 may reflect light, reflected by the phosphor 241 backwards, so that the light reflected by the phosphor 241 cannot be emitted toward the front of the light source lens 250.

That is, it is preferable that the reflection unit 251 is provided on a part of the rear surface of the light source lens 250 or a part of the front surface of the light source lens 250. It is preferable that the reflection unit 251 is large enough for the light source lens 250 to secure a sufficient light emission region. It is preferable that the reflection unit 251 is disposed off the optical axis X of the light source lens 250. It is preferable that the reflection unit 251 is disposed between the optical axis X and the circumferential surface of the light source lens 250.

The reflection unit 251 may be provided on a part of the rear surface of the light source lens 250 or a part of the front surface of the light source lens 250. The reflection unit 251 may be provided to reflect light, emitted by the light source 230, toward the phosphor 241.

The reflection unit 251 may reflect incident light toward the rear of the light source lens 250.

It is preferable that the position of the reflection unit 251 is determined considering a distance between the phosphor 241 and the light source lens 250.

Since it is preferable that the phosphor 241 is disposed close to the rear surface of the light source lens 250, the reflection unit 251 is preferably provided on the front surface of the light source lens 250.

That is, the reflection unit 251 may be provided on a part of the front surface of the light source lens 250, and light emitted by the light source 230 or a reducer may pass through the light source lens 250 and be then incident on the reflection unit 251. In addition, the light reflected by the reflection unit 251 may pass through the light source lens 250 and be then incident on the phosphor 241. Light whose wavelength is converted by the phosphor 241 may pass through the light source lens 250 and be then emitted forwards.

The light source lens 250 may be a 3-path lens through which light passes three times, and the lighting lamp for vehicle may be made compact using the 3-path lens.

The reflection unit 251 is formed in a part of a convex front surface of the light source lens 250 along the convex front surface, and may be formed to have an arc-shaped cross section. When viewed from the front of the light source lens 250, the reflection unit 251 may have a circular or polygonal shape.

The reflection unit 251 may be a concave mirror 571 formed in the front surface of the light source lens 250. The reflection unit 251 may have a convex front surface and a concave rear surface.

The front surface of the reflection unit 251 may face a light distribution module 300, which will be described later, and may be disposed between the light source lens 250 and the light distribution module 300 thereby to be protected by them.

The reflection unit 251 may be a reflective coating layer coated on the front surface of the light source lens 250, except the optical axis X of the light source lens 250. The reflection unit 251 may be a coating layer provided on a part of the front surface of the light source lens 250. In another example, the reflection unit 251 may be a coating layer provided on a part of the front surface of the light source lens 250, except for the optical axis X of the light source lens 250. In yet another example, the reflection unit 251 may be a reflection sheet attached to the front surface of the light source lens 250, except for the optical axis X of the light source lens 250.

The light source lens 250 may have a convex front surface, and the reflection unit 251 may be formed to have an arc-shaped cross-section.

Alternatively, the reflection unit 251 may be a concave mirror formed in the front surface of the light source lens 250.

The light emission body 210 may include: a light emission head part 214 in which the light source lens 250 is mounted; and a light emission tail part 215 which is connected toward the rear of the light emission head part 214. A flange section 215a may be formed at the rear of the light emission tail part 215.

The light emission cover 220 may be disposed between the flange section 215a and the light emission head part 214 and may cover the lower portion of the light emission body 210.

The light source module 200 includes a light reducer that reduces a width of light emitted by the light source 230. The light reducer is disposed between the light source lens 250 and the light source 230. The light reducer may be disposed between the rear surface of the light source lens 250 and the front surface of the light source 230 and spaced apart from the light source lens 250 and the light source 230, respectively.

The light reducer is disposed between the light emission body 210 and the light emission cover 220. In addition, a plurality of light reducers is provided.

The light reducer may be spaced apart from the optical axis X of the light source lens 250. A part of the light reducer may be disposed on the optical axis X of the light source lens 250, but an optical axis P of the light reducer may be spaced apart from the light source lens 250.

The light reducer may be disposed behind the light source lens 250 and emit light in a direction parallel to the optical axis X of the light source lens 250. The optical axis P of the light reducer may be in parallel to the optical axis X of the light source lens 250.

The light reducer includes : a first reducer lens 260; and a second reducer lens 270 which is spaced apart from the first reducer lens 260 and reduces a width of light that is emitted by and passes through the first reducer lens 260.

The first reducer lens 260 may be disposed between the light emission body 210 and the light emission cover 220. Alternatively, the first reducer lens 260 may be disposed between the light source 230 and the light source lens 250 in a light emission direction.

The second reducer lens 270 may be disposed between the light emission body 210 and the light emission cover 220. Alternatively, the second reducer lens 270 may be disposed between the first reducer lens 260 and the light source lens 250 in a light emission direction.

The first reducer lens 260 has a light entrance surface and a light exit surface, and the second reducer lens 270 has a light entrance surface and a light exit surface.

The light exit surface of the first reducer lens 260 and the light entrance surface of the second reducer lens 270 may be spaced apart from each other. The light exit surface of the first reducer lens 260 and the light entrance surface of the second reducer lens 270 may be spaced apart from each other in a direction parallel to the optical axis X of the light source lens 250. The first reducer lens 260 and the second reducer lens 270 may be spaced apart from each other with air therebetween.

An optical axis of the first reducer lens 260 and an optical axis of the light source lens 250 may be spaced apart from each other. In addition, an optical axis of the second reducer lens 270 and an optical axis of the light source lens 250 may be spaced apart from each other.

In addition, an optical axis of the first reducer lens 260 and an optical axis of the second reducer lens 270 may coincide with each other.

The first reducer lens 260 and the second reducer lens 270 may be spaced apart from each other in a front-to-rear direction. The light exit surface of the first reducer lens 260 and the light entrance surface of the second reducer lens 270 may be spaced apart from each other in the front-to-rear direction.

The first reducer lens 260 may be disposed between the light source 230 and the second reducer lens 270, and the second reducer lens 270 may be disposed between the first reducer lens 260 and the light source lens 250.

The light entrance surface of the first reducer lens 260 may face the light source 230.

The optical axis P of the first reducer lens 260 may coincide with the optical axis of the second reducer lens 270.

The light exit surface of the second reducer lens 270 may face the rear surface of the first light source lens 250. It is preferable that the light exit surface of the second reducer lens 270 does not face the dissipation member 243 or the phosphor 241.

Each of the first reducer lens 260 and the second reducer lens 270 may have a convex light entrance surface on which light is to be incident. Each of the first reducer lens 260 and the second reducer lens 270 may have a concave light exit surface from which light is emitted.

The rear surface of the first reducer lens 260 may be a light entrance surface that is a curved surface concave toward the rear of the first reducer lens 260. Light incident from the light source 230 may be refracted from the convex light entrance surface, and light passing through the first reducer lens 260 may be gradually reduced in width.

The front surface of the first reducer lens 260 may be a light exit surface that is a curved surface concave toward the rear of the first reducer lens 260. The front surface of the first reducer lens 20 may be the light exit surface which is concave entirely or only at the center thereof.

A part of the light exit surface of the first reducer lens 260 may face the light entrance surface of the second reducer lens 270.

The rear surface of the second reducer lens 270 may be a light entrance surface that is a curved surface convex toward the rear of the second reducer lens 270. Light emitted by the first reducer lens 260 and passing through the air between the first reducer lens 260 and the second reducer lens 270 may be refracted from the convex light entrance surface of the second reducer lens 270, and light passing through the second reducer lens 270 may be gradually reduced in width.

The front surface of the second reducer lens 270 may be a light exit surface that is a curved surface concave toward the rear of the second reducer lens 270. The front surface of the second reducer lens 270 may be the light exit surface which is concave entirely or only at the center thereof.

The first reducer lens 260 may have a convex light entrance surface on which light is to be incident, and the second reducer lens 270 may have a concave light exit surface from which light is to be emitted.

The entire light exit surface of the second reducer lens 270 may face the rear surface of the light source lens 250.

A diameter D2 of the second reducer lens 270 may be smaller than a diameter D1 of the first reducer lens 260. A thickness T2 of the second reducer lens 270 may be thinner than a thickness T1 of the first reducer lens 260.

Since light is primarily reduced by the first reducer lens 260, the second reducer lens 270 may be formed smaller than the first reducer lens 260 for the purpose of a more efficient use of an ambient space.

The light entrance surface of the first reducer lens 260 and the light entrance surface of the second reducer lens 270 may have the same curvature or different curvature.

A degree of reduction in width of light passing through the first reducer lens 260 may heavily depend on curvature of the light entrance surface of the first reducer lens 260. If the light entrance surface of the first reducer lens 260 has a great curvature, light passing through the first reducer lens 260 may be greatly reduced in width.

That is, if the light entrance surface of the light reducer lens 260 has a great curvature, it is possible to further reduce the size of each of the second reducer lens 270, the reflection unit 251, and the light source lens 250.

Light whose width is primarily reduced by the first reducer lens 260 may be incident on the light entrance surface of the second reducer lens 270, and it is preferable that the light entrarnce surface of the second reducer lens 270 is formed not to reduce light excessively.

In the case where the light entrance surface of the first reducer lens 260 and the light entrance surface of the second reducer lens 270 have different curvature, it is preferable that a curvature of the light entrance surface of the first reducer lens 260 is greater than a curvature of the light entrance surface of the second reducer lens 270.

The light exit surface of the first reducer lens 260 and the light exit surface of the second reducer lens 270 may have the same curvature or different curvature.

A width of light emitted by the first reducer lens 260 may be changed according to the curvature of the light exit surface of the first reducer lens 260.

The light exit surface of the first reducer lens 260 may have a curvature where light passing through the light exit surface is emitted in a direction parallel to the optical axis of the first reducer lens 260. In addition, the light exit surface of the first reducer lens 260 may have a curvature where a width of light passing through the light exit surface of the first reducer lens 260 is gradually reduced between the light exit surface of the first reducer lens 260 and the light entrance surface of the second reducer lens.

A width of light incident on the reflection unit 251 may be changed according to a curvature of the light exit surface of the second reducer lens 270. It is preferable that the light exit surface of the second reducer lens 270 is in a shape which allows light passing through the light exit surface of the second reducer lens 270 to be incident on the reflection unit 251 in a direction parallel to the optical axis of the second reducer lens 270.

In the case where the light exit surface of the first reducer lens 260 and the light exit surface of the second reducer lens 270 have different curvature, it is preferable that a curvature of the light exit surface of the second reducer 270 is greater than a curvature of the light exit surface of the first reducer lens 260.

The light emission body 210 may be disposed to contact the circumferential surface of the first reducer lens 260. In addition, the light emission cover 220 may be disposed to contact the circumferential surface of the first reducer lens 260.

The light emission body 210 may further include a first reducer stopping protrusion 215d and a first reducer fixing protrusion 215e. The first reducer lens 260 may be disposed between the first reducer stopping protrusion 215d and the first reducer fixing protrusion 215e.

The first reducer stopping protrusion 215d may be disposed in front of the first reducer lens 260. In another example, the first reducer stopping protrusion 215d may be disposed to contact the front surface of the first reducer lens 260.

The first reducer fixing protrusion 215e may be disposed behind the first reducer lens 260. In another example, the first reducer fixing protrusion 215e may be disposed to contact the rear surface of the first reducer lens 260.

The light emission cover 220 may further include a first reducer stopping protrusion 221 and a first reducer fixing protrusion 222, and the first reducer lens 260 may be disposed between the first reducer stopping protrusion 221 and the first reducer fixing protrusion 222.

The first reducer stopping protrusion 221 may be disposed in front of the first reducer lens 260. In another example, the first reducer stopping protrusion 221 may be disposed to contact the front surface of the first reducer lens 260.

The first reducer fixing protrusion 222 may be disposed behind the first reducer lens 260. In another example, the first reducer fixing protrusion 222 may be disposed to contact the rear surface of the first reducer lens 260.

Each first reducer stopping protrusion 221 may be formed in the light emission body 210 and the light emission cover 220. A first reducer stopping protrusion 221 of the light emission body 210 and a first reducer stopping protrusion 221 of the light emission cover 220 may be disposed to be connected to each other when the light emission body 210 and the light emission cover 220 are coupled to each other.

The first reducer stopping protrusion 221 and the first reducer fixing protrusion 222 formed in the light emission body 210 may fix or constrain the first reducer lens 260 in a longitudinal direction of the light emission body 210.

The first reducer stopping protrusion 221 and the first reducer fixing protrusion 222 formed in the light emission cover 220 may fix or constrain the first reducer lens 260 in a longitudinal direction of the light emission cover 220.

Each first reducer fixing protrusion 222 may be formed in the light emission body 210 and the light emission cover 220. A first reducer stopping protrusion 222 of the light emission body 210 and a first reducer fixing protrusion 222 of the light emission cover 220 may be disposed to be connected to each other when the light emission body 210 and the light emission cover 220 are coupled to each other.

The light emission body 210 may be disposed to contact the circumferential surface of the second reducer lens 270. In addition, the light emission cover 220 may be disposed to contact the circumferential surface of the second reducer lens 270.

The light emission body 210 may further include a second reducer stopping protrusion 215f and a second reducer fixing protrusion 215g. The second reducer lens 270 may be disposed between the second reducer stopping protrusion 215f and the second reducer fixing protrusion 215g.

The second reducer stopping protrusion 215f may be disposed in front of the second reducer lens 270. In another example, the second reducer stopping protrusion 215f may be disposed to contact the front surface of the second reducer lens 270.

The second reducer fixing protrusion 215g may be disposed behind the second reducer lens 270. In another example, the second reducer fixing protrusion 215g may be disposed to contact the rear surface of the second reducer lens 270.

The light emission cover 220 may further include a second reducer stopping protrusion 223 and a second reducer fixing protrusion 224, and the second reducer lens 270 may be disposed between the second reducer stopping protrusion 223 and the second reducer fixing protrusion 224.

The second reducer stopping protrusion 223 may be disposed in front of the second reducer lens 270. In another example, the second reducer stopping protrusion 223 may be disposed to contact the front surface of the second reducer lens 270.

The second reducer fixing protrusion 224 may be disposed behind the second reducer lens 270. In another example, the second reducer fixing protrusion 224 may be disposed to contact the rear surface of the second reducer lens 270.

Each second reducer stopping protrusion 223 may be formed in the light emission body 210 and the light emission cover 220. A second reducer stopping protrusion 223 of the light emission body 210 and a second reducer stopping protrusion 223 of the light emission cover 220 may be disposed to be connected to each other when the light emission body 210 and the light emission cover 220 are coupled to each other.

The second reducer stopping protrusion 223 and the second reducer fixing protrusion 224 formed in the light emission body 210 may fix or constrain the second reducer lens 270 in a longitudinal direction of the light emission body 210.

The second reducer stopping protrusion 223 and the second reducer fixing protrusion 224 formed in the light emission cover 220 may fix or constrain the second reducer lens 270 in a longitudinal direction of the light emission cover 220.

Each second reducer fixing protrusion 224 may be formed in the light emission body 210 and the light emission cover 220. A second reducer fixing protrusion 224 of the light emission body 210 and a second reducer fixing protrusion 224 of the light emission cover 220 may be disposed to be connected to each other When the light emission body 210 and the light emission cover 220 are coupled to each other.

Light emitted by the light source 230 may pass through the first reducer lens 260 and the second reducer lens 270. Light emitted by the second reducer lens 270 may pass through the light entrance hole 214a and be then incident on the light source lens 250.

The light entrance hole 214a may be formed in the light emission body 210. In another example, the light entrance hole 214a may be formed in the light emission cover 220. In yet another example, the light entrance hole 214a may be formed between the light emission body 210 and the light emission cover 220.

The front surface of the second reducer lens 270 may be disposed to face the rear surface of the light source lens 250 through the light entrance hole 214a.

The light emission tail part 215 may include a light source insertion hole 215b which penetrates the flange section 215a, and the light source 230 may be inserted into the light source insertion hole 215b. The light source 230 may be disposed between the light emission body 210 and the light emission cover 220.

The light source 230 may include a light emitter 231 and a base portion 232, and the light emission tail part 215 may further include a stopping protrusion 215c formed along an inner circumferential surface of the light source insertion hole 215b. When the light source 230 is inserted into the light source insertion hole 215b, the front surface of the base portion 232 may be stopped by the stopping protrusion 215c and the rear surface of the base portion 232 may be exposed outside the light emission head part 214.

A flange section 215a which comes into contact with the dissipation module 600 may be formed in the light emission tail part 215.

A common-type dissipation module 600 may be used, regardless of respective functions of the plurality of light function modules. Hereinafter, the dissipation module 600 will be described.

The dissipation module 600 may be disposed behind the light emission body 210 to come into contact with the flange section 215a.

The dissipation module 600 may include a heat pipe 610 in contact with at least part of the rear surface of the base portion 232.

The dissipation module 600 may be disposed in contact directly with each of a plurality of light source modules 200, and the dissipation module 600 may absorb heat of each of the plurality of light source modules 200.

The light lamp for vehicle may be configured such that two light source modules 200 are connected to a single dissipation module 600. In this case, the dissipation module 600 may configure a part of the first light function module 20 and a part of the second light function module 30.

A first light module 5 may include a first light distribution module 300, one light source module 200 connected to the first light distribution module 300, a second light distribution module 400, the other light source module 200 connected to the second light distribution module 400, and a dissipation module 600 disposed to contact the two light source modules 200.

The heat pipe 610 may be disposed to contact the plurality of light sources 230. The heat pipe 610 may be disposed to contact each base portion 232 of the plurality of light sources 230.

The dissipation module 600 may further include a dissipation plate 620 in contact with the heat pipe 610.

The dissipation plate 620 may include a fixing part 622 fixed to the flange section 215a, and a pressing part 623 pressing the heat pipe 610. The dissipation plate 620 may be disposed to contact the heat pipe 610. Heat generated by the light source 230 may be transferred to the heat pipe 610. The heat transferred to the heat pipe 610 may be transferred to the dissipation plate 620.

The heat pipe 610 may be in contact directly with the flange section 215a, but may not be coupled directly to the flange section 215a. The heat pipe 610 may have a space formed therein. The heat pipe 610 may contain a fluid in order to promote the heat transfer. Thus, when the heat pipe 610 and the flange section 215a are coupled to each other using a fastening member, the fluid contained in the heat pipe 610 may leak. Accordingly, it is preferable that the heat pipe 610 is fixed to the flange section 215a using another component, without being coupled directly to the flange section 215a.

The dissipation plate 610 may be coupled directly to the flange section 215a. In addition, the heat pipe 610 may be disposed between the flange section 215a and the dissipation plate 620. The dissipation plate 620 coupled to the flange section 215a may apply pressure on the heat pipe 610. The heat pipe 610 may be fixed between the flange section 215a and the pressing part 623.

The light function module may further include a fastening member that penetrates the flange section 215a and the fixing part 622. The dissipation plate 620 may be fixed to the flange section 215a using the fastening member.

In addition, the dissipation plate 620 may include a light source pressing part 623 that comes into contact with a part of the rear surface of the base portion 232. The light source 230 is supplied with power and emits light through the light emitter 231, and thus, the light source 230 needs to be provided with power. The light source 230 may further include a power supply unit 233 connected to the base portion 232. The power supply unit 233 may be connected to the base portion 232 and disposed behind the light emission body 210.

Thus, the heat pipe 610 may be disposed to contact a region of the base portion 232 exposed outside the light emission body 210, except for a region of the base portion 232 connected to the power supply unit 233. The dissipation plate 620 may further include a light source pressing unit 623 that comes into contact with a region of the base portion 232 exposed outside the light emission body 210, except for a region of the base portion 232 connected to the power supply unit 233 and a region of the base portion 232 contacting the heat pipe 610.

The light source pressing part 623 may absorb heat generated by the light source 230.

As illustrated in FIG. 14, the front surface of the base portion 232 may be disposed to contact the stopping protrusion 215c formed in the light emission body 210, and the rear surface of the base portion 232 may come into contact with the heat pipe 610 or the dissipation plate 620. The light source 230 may be fixed between the heat pipe 610 and the stopping protrusion 215c. The light source 230 may be constrained between the heat pipe 610 and the stopping protrusion 215c in a longitudinal direction of the light emission body 210.

In another example, the light source 230 may be fixed between the dissipation plate 620 and the stopping protrusion 215c. The light source 230 may be constrained between the dissipation plate 620 and the stopping protrusion 215c in a longitudinal direction of the light emission body 210.

The dissipation module 600 may further include a dissipation fin 630 connected to the dissiption plate 620. The dissipation fin 630 may dissipate heat, transferred from the dissipation plate 620, to the outside. In order to enhance efficiency of heat transfer with outdoor air, a plurality of dissipation fins 630 may be provided.

Heat generated by the light source 230 may be transferred to the dissipation plate 620 through the heat pipe 610. The heat transferred to the dissipation plate 620 may be dissipated to outdoor air through the dissipation fin 630.

In addition, the heat generated by the light source 230 may be transferred to the dissipation plate 620 through the light source pressing part 623. The heat transferred to the dissipation plate 620 may be dissipated to outdoor air through the dissipation fin 630.

As illustrated in FIG. 14, the heat pipe 610 may include an extension part 611 bent toward the rear of the light emission body 210. The heat pipe 610 may come into contact with a plurality of light sources 230. Even in the case where the heat pipe 610 is not in contact with the light sources 230, the heat pipe 610 may include the elongated extension part 611 in order to improve efficiency of heat transfer. In addition, the dissipation module 600 may further include a sub-dissipation plate 640 in contact with the extension part 611. Together with the extension part 611, the sub-dissipation plate 640 may improve dissipation efficiency.

Hereinafter, the first light distribution module 300 which is to be coupled to the light source module 200 will be described.

The first light distribution module 300 may emit light, emitted by the light source module 200, as a high beam.

The first light distribution module 300 may include: a first projection lens 302; and a first light distribution case 310 including a first light emission opening 306 formed at the front thereof and a first projection lens accommodating space 308.

The first projection lens 302 may be mounted in the first projection lens accommodating space 308.

The first projection lens 302 may have a convex front surface.

At least part of the front surface of the first projection lens 302 may be exposed outside the first light distribution case 310 by the first light emission opening 306.

The first projection lens 302 may be formed larger than the light source lens 250. The optical axis of the first projection lens 302 may coincide with the optical axis X of the light source lens 250.

The first projection lens 302 may include a front surface, a rear surface, and a circumferential surface. The front surface of the first projection lens 302 may be a curved surface convex toward the front of the first projection lens 302. The rear surface of the first projection lens 302 may be a flat surface. The first projection lens 302 may be symmetrical with reference to the optical axis thereof.

The first light distribution module 300 may further include a first projection lens retainer 320 which is couped to the rear surface of the first light distribution case 310 and fixes the first projection lens 302 to the first light distribution case 310.

The first light distribution case 310 may further include a first projection stopping protrusion 309 formed along a circumference of the first light emission opening 306. The first projection lens stopping protrusion 309 may be disposed to contact the front surface of the first projection lens 302. The first projection lens retainer 320 may be fixed to the first light distribution case 310 and may be disposed to contact the rear surface of the first projection lens 302. The first projection lens 302 may be disposed or fixed between the first projection lens retainer 320 and the first projection lens stopping protrusion 309.

The diffuser 290 installed in the light emission body 210 may be installed behind the first light distribution case 310. In this case, the diffuser 290 may be disposed behind the first projection lens remainer 320 of the first light distribution module 300 and may face the rear surface of the first projection lens 302.

Hereinafter, the second light distribution module 400 coupled to the light source module 200 will be described.

The second light distribution module 400 may emit light, emitted by the light source module 200, as a booster beam. The booster beam may partially increase brightness of an emission area of the high beam.

The second light distribution module 400 may include: the second projection lens 402; and a second light distribution case 410 including a second light emission opening 406 formed at the front thereof and a second projection lens accommodating space 408.

The second projection lens 402 may be mounted in the second projection lens accommodating space 408.

The second projection lens 402 may have a convex front surface.

At least part of the front surface of the second projection lens 402 may be exposed outside the second light distribution case 410 by the second light emission opening 406.

The second projection lens 402 may be formed larger than the light source lens 250. The optical axis of the second projection lens 402 may coincide with the optical axis X of the light source lens 250.

The second projection lens 402 may include a front surface, a rear surface, and a circumferential surface. The front surface of the second projection lens 402 may be a curved surface convex toward the front of the second projection lens 402. The rear surface of the second projection lens 402 may be a flat surface. The second projection lens 402 may be symmetrical with reference to the optical axis of its own.

The second light distribution module 400 may further include a second projection lens remainer 420 which is coupled to the rear surface of the second light distribution case 410 fixes the second projection lens 402 to the second light distribution case 410.

The second light distribution case 410 may further include a second projection lens stopping protrusion (not shown) formed along a circumferentce of the second light emission opening 406. The second projection lens stopping protrusion may be disposed to contact the front surface of the second projection lens 402. The second projection lens retainer 420 may be fixed to the second light distribution case 410 and may be disposed to contact the rear surface of the second projection lens 402. The second projection lens 402 may be disposed or fixed between the second projection lens retainer 420 and the second projection lens stopping protrusion.

The diffuser 290 installed in the light emission body 210 may be installed behind the second light distribution case 410. In this case, the diffuser 290 may be disposed behind the second projection lens retainer 420 and may be disposed to face the rear surface of the second projection lens 402.

The first projection lens 302 and the second projection lens 402 may have different curvature and a different radius, and therefore, they may have a different emission area.

With reference to FIGS. 16 and 17, an optical system of a light function module including the first light distribution module 300 or the second light distribution module 400 will be described.

The following description is about an example in which the light source 230 emits blue-based light and the phosphor 241 converts the blue-based light into yellow-based light. In addition, the first projection lens 302 and the second projection lens 402 are depicted as a single projection lens for convenience of explanation.

First of all, when the light source 230 is turned on, blue-based light A may be emitted by the light source 230 and be then incident on a light reducer in a direction parallel to the optical axis of the light source 230.

The light A emitted by the light source 230 in the direction parallel to the optical axis of the light source 230 may be incident on the light entrance surface of the first reducer lens 260. The light A may be refracted from the light entrance surface of the first reducer lens 260 thereby to be reduced in width.

The light refracted from the light entrance surface of the first reducer lens 260 may pass through the first reducer lens 260 and be then emitted from the light exit surface of the first reducer lens 260.

Light B emitted from the light exit surface of the first reducer lens 260 may be incident on the light entrance surface of the second reducer lens 270 in a direction parallel to the optical axis of the first reducer lens 260 or may be gradually reduced in width, when travelling between the light exit surface of the first reducer lens 260 and the light entrance surface of the second reducer lens 270, and be then incident on the light entrance surface of the second reducer les 270.

The light incident on the light entrance surface of the second reducer lens 270 may pass through the second reducer lens 270 and be then emitted from the light exit surface of the second reducer lens 270 in a direction parallel to the optical axis of the second reducer lens 270.

That is, while passing through the first reducer lens 260, the air between the first reducer and the second reducer, and the second reducer lens 270 in the order named, the light A emitted by the light source 230 is reduced in width, and light C which is reduced in width may be incident on the rear surface of the light source lens 250 in a direction parallel to the optical axis of the second reducer lens 270.

Light D incident on the rear surface of the light source lens 250 may pass through the rear of the reflection unit 251 thereby to be incident on the rear surface of the reflection unit 251, and be then reflected from the rear surface of the reflection unit 251 toward the light source lens 250.

Light E reflected by the reflection unit 251 may be reflected in a direction toward the optical axis X of the light source lens 250 or may be refracted from the rear surface of the light source lens 250.

Light F refracted from the rear surface of the light source lens 250 may pass between the rear surface of the light source lens 250 and the reflective phosphor 241 and be then incident on the phosphor 241.

A wavelength of the light incident on the phosphor 241 may be converted by the phosphor 241, and white-based light F may be emitted by the phosphor 241 toward the rear surface of the light source lens 250.

The light emitted by the phosphor 241 toward the rear surface of the light source lens 250 may pass through the light source lens 250, and such light G may pass through the front surface of the light source lens 250 and be incident on the rear surface of a projection lens.

The light incident on the projection lens may pass through the projection lens and be then refracted from the front surface of the projection lens thereby to be emitted toward the front of the projection lens in a direction parallel to the optical axis of the projection lens.

Light H emitted toward the front of the projection lens may be emitted toward the front of the vehicle.

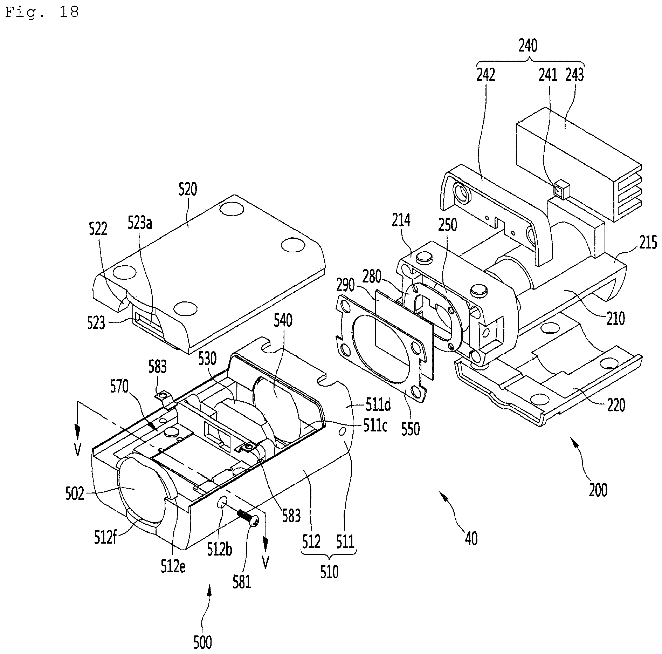

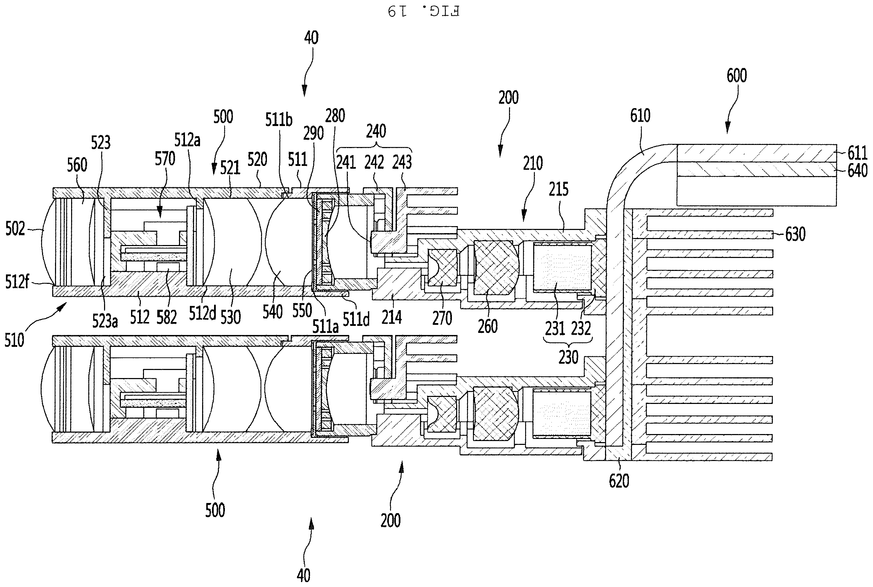

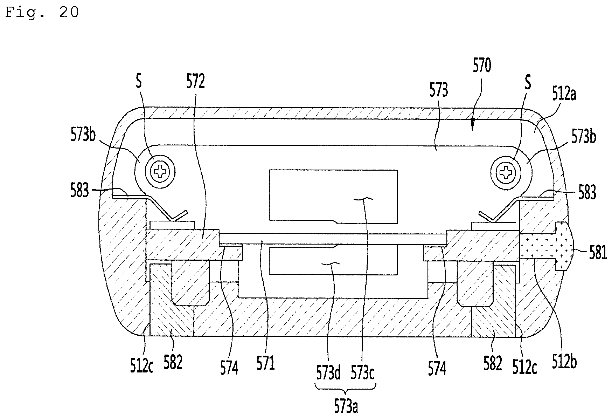

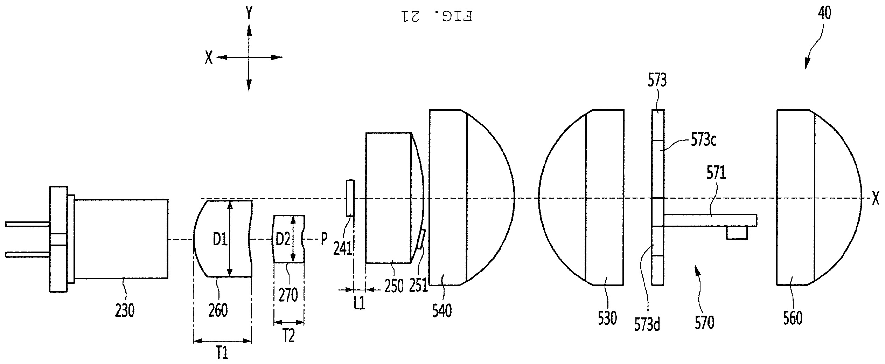

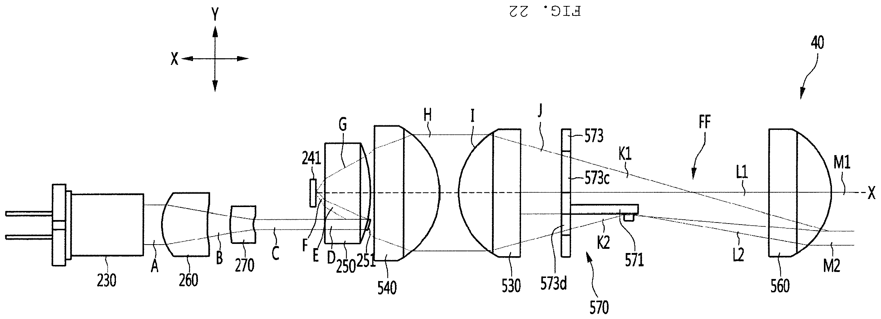

FIG. 18 is an exploded perspective view of a light distribution module and a light source module shown in FIG. 9; FIG. 19 is a cross-sectional view taken along line T-T of FIG. 7; FIG. 20 is a cross-sectional view taken along line V-V of FIG. 7; FIG. 21 is a configuration diagram of an optical system of the light distribution module and the light source module shown in FIG. 7; and FIG. 22 is a diagram illustrating an optical path of the optical system shown in FIG. 21.

A third light function module 40 out of a plurality of light function modules may include a third light distribution module 500, a light source module 200, and a dissipation module 600.

The third light distribution module 500 may include a third projection lens 502, a light distribution case 510, a light distribution cover 520, a focusing lens 530, and a shield retainer assembly 570. In another example, the third light distribution module 500 may further include a collimator lens 540 and a collimator lens retainer 550.

The collimator lens 540, the focusing lens 530, a third projection lens 560, and the shield retainer assembly 570 may be accommodated in the light distribution case 510. The light distribution cover 520 may be disposed to cover the light distribution case 510.

The collimator lens 540 may emit light incident on the rear surface thereof in a form of parallel light. The parallel light may be parallel to the optical axis of the collimator lens 540.

The rear surface of the collimator lens 540 may be a flat surface or a curved surface that is concave toward the front of the collimator lens 540. In another example, a part of the rear surface of the collimator lens 540 may be a flat surface and the rest of the rear surface may be a curved surface that is concave toward the front of the collimator lens 540.

The collimator lens 540 may be disposed such that the front surface thereof faces the rear surface of the focusing lens 530.

Light incident on the rear surface of the collimator lens 540 may be light emitted by the light source lens 250. The light emitted by the light source lens 250 may not be parallel light, but scatterd light.

The light distribution case 510 may include a light distribution head part 511 and a light distribution tail part 512. The light distribution head part 511 may include a collimator lens insertion hole 511a formed at the rear thereof and a collimator lens accommodating space 511b. The light distribution tail part 512 may be connected to the front of the light distribution head part 511. The collimator lens 540 may be mounted in the collimator lens accommodating space 511b.

The focusing lens 530 may have a convex rear surface, and the collimator lens 540 may have a convx front surface. The optical axis of the focusing lens 530 and the optical axis of the collimator lens 540 may coincide with each other.

Parallel light formed by the collimator lens 540 may be parallel to the optical axis X of the collimator lens 540. In addition, the parallel light may be parallel to the optical axis of the focusing lens 530.

The light distribution cover 520 may cover the light distribution tail part 512. The light distribution tail part 512 may accommodate the focusing lens 530, the shield retainer assembly 570, and the third projection lens 560.

The length of the light distribution cover 520 may be longer than a distance between the third projection lens 560 and the focusing lens 530.

The focusing lens 530 may be disposed in front of the collimator lens 540, and the front surface of the collimator lens 540 and the rear surface of the focusing lens 530 may be disposed to face each other.

The third light distribution module 500 may further include a collimator lens retainer 550 which is coupled to the rear surface of the light distribution head part 511 and fixes the collimator lens 540 to the light distribution head part 511. The collimator lens retainer 550 may come into contact with the rear surface of the collimator lens 540. The collimator lens retainer 550 may press the rear surface of the collimator lens 540.

The light distribution head part 511 may further include a collimator lens stopping protrusion 511c formed along an inner circumferential surface of the collimator lens insertion hole 511a. The collimator lens stopping protrusion 511c may be disposed in front of the collimator lens 540. The collimator lens stopping protrusion 511c may come into contact with the front surface of the collimator lens 540. The collimator lens stopping protrusion 511c may press the front surface of the collimator lens 540.

The collimator lens retainer 550 may include a mounting part fixed to the light distribution head part 511, and a pressing part pressing the collimator lens 540. The collimator lens 540 may be disposed between the collimator lens stopping protrusion 511c and the collimator lens retainer 550. The collimator lens 540 may be fixed between the collimator lens stopping protrusion 511c and the collimator lens 540. In another example, the collimator lens 540 may be constrained between the collimator lens stopping protrusion 511c and the collimator lens 540 in a longitudinal direction of the light distribution case 510.

The third light distribution module 500 may further include a fastening member penetrating the mounting part and fixed to the rear surface of the light distribution head part 511.

The light distribution head part 511 may include an insertion part 511d protrudes from the periphery of the collimator lens retainer 550 to the rear of the light distribution case 510. The third light distribution module 500 may be coupled to the light source module 200, and a part of the front of the light source module 200 may be inserted into the rear of the third light distribution module 500. The front of the light source module 200 may be inserted into the insertion part 511d of the light distribution case 510.

The third light distribution module 500 may further include a diffuser 290 which is disposed behind the collimator lens retainer 550 and faces the rear surface of the collimator lens 540. The diffuser 290 may be disposed in the light source module 200 or the third light distribution module 500.

The focusing lens 530 may include a front surface, a rear surface, and a circumferential surface. The front surface of the focusing lens 530 may be a flat surface. The rear surface of the focusing lens 530 may be a curved surface convex toward the rear of the focusing lens 530. The focusing lens 530 may be symmetrical with reference to the optical axis thereof.

The focusing lens 530 may concentrate incident light on the rear surface and emit the concentrated light. The focusing lens 530 may concentrate light incident on the rear surface thereby to form an image forming point. The image forming point of the focusing lens 530 may be formed in front of the focusing lens 530.

The image forming point formed by the focusing lens 530 may be a point where rays of light geometrically converge. An image is formed at the image forming point. If a screen is located at the image forming point, an image may be formed on the screen.

By concentrating light incident on the rear surface, the focusing lens 530 may form a focus FF, as illustrated in FIG. 22. A focus FF indicates the point where rays of light passing through a lens converge. The focus FF of the focusing lens 530 may be formed on the front of the focusing lens 530.

The front surface of the focusing lens 530 may be a flat surface or a curved surface concave toward the rear of the focusing lens 530. In another example, a part of the front surface of the focusing lens 530 may be a curved surface that is concave toward the rear of the focusing lens 530.

The focusing lens 530 may be disposed between the light distribution case 510 and the light distribution cover 520 and disposed in front of the collimator lens 540.

The light distribution case 510 may further include a focusing lens mounting groove 512d. The focusing lens 530 may be mounted in the focusing lens mounting groove 512d. The focusing lens mounting groove 512d may be disposed to contact the front surface and the rear surface of the focusing lens 530. When mounted in the focusing lens mounting groove 512d, the focusing lens 530 may be constrained in a longitudinal direction of the light distribution case 510.

The light distribution cover 520 may further include a focusing lens mounting groove 521. The focusing lens 530 may be mounted in the focusing lens mounting groove 521. The focusing lens mounting groove 521 may be disposed to contact the front surface and the rear surface of the focusing lens 530. When mounted in the focusing lens mounting groove 521, the focusing lens 530 may be constrained in a longitudinal direction of the light distribution cover 520.

The shield retainer assembly 570 may include a shield 573, a mirror 571, and a mirror mounting part 572. The shield retainer assembly 570 may be disposed in front of the focusing lens 530. The front surface of the focusing lens 530 may be disposed to face the shield 573. The shield 573 may be disposed parallel to the front surface of the focusing lens 530. In another example, the shield 573 may be disposed parallel to the rear surface of the collimator lens 540. In yet another example, the shield 573 may be disposed perpendicular to the optical axis of the focusing lens 530.

The shield 573 may shield a part of light passing through the image forming point of the focusing lens 530. The shield 573 may include an opening 573a. A plurality of openings 573a may be formed in the shield 573. The shield 573 may include an upper opening 573c formed above the optical axis of the focusing lens 530. In addition, the shield 573 may include a lower opening 573d formed below the optical axis of the focusing lens 530.

The shield 573 may allow a part of light emitted by the focusing lens 530 to pass through the opening 573a, and shield the rest of the light. The opening 573a formed in the shield 573 may form a cut-off line. Implementation of light Distribution may be adjusted according to the shape of the cut-off line of the opening 573a. When the third light distribution module 500 is used to generate a low beam, the cut-off line of the opening 573a may be adjusted to achieve a light distribution pattern required for the low beam.

That is, a pattern of light passing through the image forming point may be changed according to a shape of the shield 573. Thus, it is possible to achieve various light distribution patterns by changing the shape of the shield 573.

The collimator lens retainer 550 may include a light through hole. Light emitted by the light source module 200 may pass through the light through hole and be then incident on the rear surface of the collimator lens 540.

In the case where the shield 573 include a single opening, the width of the light through hole may be larger than the width of the opening. Light incident on the rear surface of the collimator lens 540 may be emitted in a form of parallel light, and the parallel light may be incident on the rear surface of the focusing lens 530. As the focusing lens 530 is able to make rays of light converge, the opening included in the shield 573 disposed in front of the focusing lens 530 may be smaller than the width of the light through hole.

In addition, in the case where the shield 573 has a single opening, the height of the light through hole may be greater than the width of the opening. Light incident on the rear surface of the collimator lens 540 may be emitted in a form of parallel light, and the parallel light may be incident on the rear suface of the focusing lens 530. As the focusing lens 530 is able to concentrate light, the opening included in the shield 573 disposed in front of the focusing lens 530 may be smaller than the height of the light through hole.

In addition, in the case where the shield 573 includes a plurality of openings, the width of the light through hole may be greater than the maximum width of each of the openings. Light incident on the rear surface of the collimator lens 540 may be emitted in a form of parallel light, and the parallel light may be incident on the rear surface of the focusing lens 530. As the focusing lens 530 is able to concentrate light, a width of each of the openings included in the shield 573 disposed in front of the focusing lens 530 may be smaller than the width of the light through hole.

In addition, in the case where the shield 573 includes a plurality of openings, the height of the light through hole may be greater than a sum of the heights of the openings. Light incident on the rear surface of the collimator lens 540 may be emitted in a form of parallel light, and the parallel light may be incident on the rear surface of the focusing lens 530. As the focusing lens 530 is able to concentrate rays of light, the sum of the heights of the openings included in the shield 573 disposed in front of the focusing lens 530 may be smaller than the height of the light through hole.

In the case where the shield 573 includes a single opening, the width of the focusing lens 530 may be greater than the width of the opening. Light incident on the rear surface of the collimator lens 540 may be emitted in a form of parallel light, and the parallel light may be incident on the rear surface of the focusing lens 530. As the focusing lens 530 is able to concentrate rays of light, the opening included in the shield 573 disposed in front of the focusing lens 530 may be smaller than the width of the focusing lens 530.

In addition, in the case where the shield 573 includes a single opening, the height of the focusing lens 530 may be greater than the width of the opening. Light incident on the rear surface of the collimator lens 540 may be emitted in a form of parallel light, and the parallel light may be incident on the rear surface of the focusing lens 530. As the focusing lens 530 is able to concentrate rays of light, the opening included in the shield 573 disposed in front of the focusing lens 530 may be smaller than the height of the focusing lens 530.

In addition, in the case where the shield 573 includes a plurality of openings, the width of the focusing lens 530 may be greater than the maximum width of each of the openings. Light incident on the rear surface of the collimator lens 540 may be emitted in a form of parallel light, and the parallel light may be incident on the rear surface of the focusing lens 530. As the focusing lens 530 is able to concentrate rays of light, the width of each of the openings included in the shield 573 disposed in front of the focusing lens 530 may be smaller than the width of the focusing lens 530.

In addition, in the case where the shield 573 includes a plurality of openings, the height of the focusing lens 530 may be greater than a sum of the heights of the openings. Light incident on the rear surface of the collimator lens 540 may be emitted in a form of parallel light, and the parallel light may be incident on the rear surface of the focusing lens 530. As the focusing lens 530 is able to concentrate rays of light, the sum of the heights of the openings included in the shield 573 disposed in front of the focusing lens 530 may be smaller than the width of the focusing lens 530.

The shield 573 may be disposed to face a lower portion of the front surface of the focusing lens 530. The focusing lens 530 may be divided along its optical axis into an upper portion and a lower portion. The upper portion is a portion above the optical axis, and the lower portion is a portion below the optical axis.

The shield 573 may be a member including a flat surface, and the front surface of the focusing lens 530 may be a flat surface. The fact that the shield 573 is disposed to face the front surface of the focusing lens 530 may mean that the flat surface of the shield 573 and the front surface of the focusing lens 530 can be disposed parallel to each other.

Thus, the shield 573 may be disposed parallel to the focusing lens 530 face a portion of the focusing lens 530 below the optical axis of the focusing lens 530.

As the shield 573 is disposed to face the lower portion of the front surface of the focusing lens 530, the third light distribution module 500 may generate a low beam.

The image forming point of the focusing lens 530 may be formed at a predetermined distance from the front surface of the focusing lens 530. As the focusing lens 530 is able to concentrate rays of light, the size of light passing through the focusing lens 530 may be reducedas compared to the size of light which has not yet to pass through the focusing lens 530.

Thus, the shield 573 may be smaller than the focusing lens 530. In another example, the shield 573 may be smaller than the front surface of the focusing lens 530.

The shield retainer assembly 570 may include the mirror 571, the mirror mounting part 572 on which the mirror 571 is mounted, and the shield 573 having at least one opening formed therein. The mirror mounting part 572 and the shield 573 may be orthogonal to each other.

The mirror mounting part 572 may be connected to the shield 573. The mirror mounting part 572 may be disposed orthogonal to the shield 573. In the case where an upper opening 573c and a lower opening 573d are formed in the shield 573, the mirror mounting part 572 may be connected between the upper opening 573c and the lower opening 573d.

The mirror 571 may be mounted on the mirror mounting part 572. The mirror 571 may include a reflective surface. The reflective surface may be disposed to face the bottom of the light distribution case 510.

The shield retainer assembly 570 may further include an adhesive member 574 disposed between the mirror 571 and the mirror mounting part 572. The adhesive member 574 may be disposed between the mirror mounting part 572 and the mirror 572. The mirror 571 may be fixed to or mounted on the mirror mounting part 572 using the adhesive member 574. A groove in which the adhesive member 574 is to be disposed may be formed in the mirror mounting part 572. The adhesive member 574 may be disposed between the reflective surface of the mirror 571 and the mirror mounting part 572.

The mirror 571 may be disposed parallel to the optical axis of the focusing lens 530.

In the case where the front surface of the focusing lens 530 is a flat surface, the mirror 571 may be disposed perpendicular to the front surface of the focusing lens 530.

The mirror 571 may include a reflective surface that reflects light passing through an image forming point formed by the focusing lens 530.

The mirror 571 may be disposed to reflect light passing through the lower opening 573d of the shield 573.

The reflective surface of the mirror 571 may be disposed at a predetermined distance from the optical axis of the focusing lens 530.

The mirror 571 may be disposed parallel to the optical axis of the third projection lens 560.

In the case where the rear surface of the third projection lens 502 is a flat surface, the mirror 571 may be disposed perpendicular to the rear surface of the third projection lens 502.

The reflective surface of the mirror 571 may be disposed at a predetermined distance from the third projection lens 502.

The mirror 571 may be disposed to reflect light passing through the lower opening 573d of the shield 573, and the light reflected by the mirror 571 may be incident on the rear surface of the third projection lens 502. The light reflected by the mirror 571 may be incident on a portion of the third projection lens 502 below the optical axis of of the third projection lens 502.

Light passing through the upper opening 573c of the shield 573 may be incident on a portion of the third projection lens 502 below the optical axis of the third projection lens 502.

The light incident on the portion of the third projection lens 502 below the optical axis of the third projtection lens 502 may be emitted as a low beam.

Brightness of the low beam may be a combination of brightness of light passing through the upper opening 573c of the shield 573 and brightness of light reflected by the mirror 571.

The focusing lens 530 may form a focus on the front thereof. The focus FF formed by the focusing lens 530 may be positioned between the third projection lens 502 and the focusing lens 530.

In the case where the focus FF formed by the focusing lens 530 is positioned before the rear surface of the third projection lens 502, the light passing through the upper opening 573c of the shield 573 may be incident on a portion of the third projection lens 502 above the optical axis of the third projection lens 502. The light incident on the portion of the third projection lens 502 above the optical axis of the third projection lens 502 may be emitted above the optical axis of the third projection lens 502. When the light is emitted above the optical axis of the third projection lens 502, a low beam may not be generated.

Thus, in order to generate a low beam, it is preferable that the third projection lens 502 is disposed to enable the focus formed by the focusing lens 530 to be positioned between the focusing lens 530 and the third projection lens 502.

The focusing lens 530, the shield 573, the mirror 571, and the third projection lens 502 may be arrange in the order named along a direction of emission of light incident on the rear surface of the focusing lens 530.

The shield retainer assembly 570 may be disposed between the light distribution case 510 and the light distribution cover 520 and disposed in front of the focusing lens 530.

The light distribution case 510 may further include a mounting part 512a protruding inwardly. The shield 573 may further include a fixing part 573b spaced apart from an opening. The fixing part 573b may be fixed to the mounting part 512a.

The shield retainer assembly 570 may be disposed in front of the focusing lens 530, and thus, the mounting part 512a may be disposed in front of the focusing lens 530. In addition, the mounting part 512a may be disposed behind the third projection lens 502. In addition, the mounting part 512a may be disposed between the third projection lens 502 and the focusing lens 530.

The third light distribution module 500 may further include a coupling member s penetrating the mounting part 512a and the fixing part 573b. The shield retainer assembly 570 may be fixed to the light distribution case 510 using the coupling member s.

The coupling member s may be disposed such that a longitudinal direction of the coupling member s is parallel to a longitudinal direction of the light distribution case 510.

In this case, a light distribution pattern formed by the third light distribution module 500 may be changed according to an angle and a location of the shield retainer assembly 570 fixed to the light distribution case 510. Thus, in order to achieve a desired light distribution pattern, a structure which enables finely adjusting a location of the shield retainer assembly 570 is required.

For the fine adjustment, the shield retainer assembly 570 may be formed of an elastic material. In another example, the shield retainer assembly 570 may be formed of a flexible material.

The light distributing module 300 may further include a side-surface hole 512b formed in one side surface of the light distribution case 510, and a horizontally moving screw 581 inserted into the side-surface hole 512b. The horizontally moving screw 581 may horizontally move along the side-surface hole 512b.

The horizontally moving screw 581 may press one side surface of the mirror mounting part 572 in a horizontal direction. The position of the shield retainer assembly 570 may be adjusted according to movement of the horizontally moving screw 581.

In addition, the light distributing module 300 may further include a bottom-surface hole 512c formed in the bottom surface of the light distribution case 510, and a vertically moving screw 582 inserted into the bottom-surface hole 512c. The vertically moving screw 582 may vertically move along the bottom-surface hole 512c.

The vertically moving screw 582 may press the bottom surface of the mirror mounting part 572 in a vertical direction. The position of the shield retainer assembly 570 may be adjusted according to movement of the vertically moving screw 582.

The light distributing module 300 may further include a support clip 583 fixed to the inner side surface of the light distribution case 510. The support clip 583 may press the top surface of the mirror mounting part 572 in a downward direction.

The third light distributing module 500 may further include the third projection lens 502. The third projection lens 502 may include a front surface, a rear surface, and a circumferential surface. The front surface of the third projection lens 502 may be a curved surface convex toward the front of the third projection lens 502. The rear surface of the third projection lens 502 may be a flat surface. The third projection lens 502 may be symmetrical with reference to the optical axis thereof.

The optical axis of the third projection lens 502 may coincide with the optical axis of the focusing lens 530. In another example, the third projection lens 502 may coincide with the optical axis of the collimator lens 540.

The rear surface of the third projection lens 502 may be a flat surface or a curved surface concave toward the front of the third projection lens 502. In another example, a part of the rear surface of the third projection lens 502 may be a flat surface and the rest of the rear surface may be a curved surface concave toward the front of the third projection lens 502.

The rear surface of the third projection lens 502 may be parallel to the front surface of the focusing lens 530. In another example, the rear surface of the third projection lens 502 may be parallel to the rear surface of the collimator lens 540.

The shield 573 may be disposed to face the lower portion of the rear surface of the third projection lens 502. The third projection lens 502 may be divided along its optical axis into an upper portion and a lower portion. The upper portion may be a portion above the optical axis, and the lower portion may be a portion below the optical axis.

The shield 573 may be a member including a flat surface, and the rear surface of the third projection lens 502 may be a flat surface. In this case, the fact that the shield 573 is disposed to face the rear surface of the third projection lens 502 may indicate that the flat surface of the shield 573 and the rear surface of the third projection lens 502 are able to be disposed parallel to each other.

Thus, the shield 573 may be disposed parallel to the third projection lens 502 and face an area below the optical axis of the third projection lens 502.

The third projection lens 502 may be disposed to enable an image formiing point of the focusing lens 530 to be positioned between the third projection lens 502 and the focusing lens 530.

The shield retainer assembly 570 may be disposed at the image forming point. In another example, the shield 573 may be disposed at the image forming point.

The focus FF of the focusing lens 530 may be formed on the front of the focusing lens 530. In addition, the third projection lens 502 may be disposed to enable the focus FF of the focusing lens 530 to be positioned between the third projection lens 502 and the focusing lens 530. The third light distribution module 500 may be configured such that the collimator lens 540, the focusing lens 530, the shield 573, and the projection lens 502 are arranged in the order named along the X-axis.

The light distribution module 300 may further include a third projection lens 502, and the third projection lens 502 may be disposed between the light distribution case 510 and the light distribution cover 520 and disposed in front of the shield retainer assembly 570.

The light distribution cover 520 may include a cover shield 523 connected thereto in a downward direction. The cover shield 523 may be disposed between the third projection lens 502 and the shield retainer assembly 570. The cover shield 523 may be disposed to face the rear surface of the third projection lens 502.

The cover shield 523 may prevent light from being emitted in a pattern other than a light distribution pattern formed by the third light distribution module 500. Accordingly, the cover shield 523 may include at least one opening 523a. The cover shield 523 may be formed in a different shape according to the cut-off line of the opening 523a formed in the shield 573 or the number of openings 573a formed in the shield 573.

The light distribution case 510 may further include a third projection lens mounting groove 512e. The third projection lens 502 may be mounted in the projection lens mounting groove 512e. The third projection lens mounting groove 512e may be disposed to contact the front surface and the rear surface of the third projection lens 502. When mounted in the third projection lens mounting groove 512e, the third projection lens 502 may be constrained in a longitudinal direction of the light distribution case 510.

The light distribution cover 520 may further include a third projection lens mounting groove 522. The third projection lens 502 may be mounted in the third projection lens mounting groove 522. The third projection lens mounting groove 522 may be disposed to contact the front surface and the rear surface of the third projection lens 502. When mounted in the third projection lens mounting groove 522, the third projection lens 502 may be constrained in a longitudinal direction of the light distribution cover 520.

The light distribution module 300 may include a light emission opening 512f. The light emission opening 512f may be formed by coupling the light distribution tail part 512 and the light distribution cover 520. At least part of the front surface of the third projection lens 502 may be exposed outside the light distribution case 510 by the light emission opening 512f.

The second light module 6 may include two third light distribution modules 500, two light source modules 200, and one dissipation module 600 connected to the two light source modules 200.

With reference to FIGS. 21 and 22, an optical system of a light function module including a third light distribution module 500 will be described.

The following description is about an example in which the light source 230 emits blue-based light and the phosphor 241 converts the blue-based light into yellow-based light.

First of all, when the light source is turned on 230, the light source 230 may emit blue-based light A and the light A emitted by the light source 230 may be incident on a light reducer in a direction parallel to the optical axis of the light source 230.

The light A emitted by the light source 230 in the direction parallel to the optical axis of the light source 230 may be incident on a light entrance surface of the first reducer lens 260 and be then refracted from the light entrance surface of the first reducer lens 260 thereby to be reduced in width.

The light refracted from the light entrance surface of the first reducer lens 260 may pass through the first reducer lens 260 and be then emitted from a light exit surface of the first reducer lens 260.

Light B emitted from the light exit surface of the first reducer lens 260 may be incident on a light entrance surface of the second reducer lens 270 in a direction parallel to the optical axis of the first reducer lens 260 or may be gradually reduced in width, when passing between the light exit surface of the first reducer lens 260 and the light entrance surface of the second reducer lens 270, and be then incident on the light entrance surface of the second reducer lens 270.

The light incident on the light entrance surface of the second reducer lens 270 may pass through the second reducer lens 270 and emitted from a light exit surface of the second reducer lens 270 in a direction parallel to the optical axis of the second reducer lens 270.

That is, the light A emitted by the light source 230 may be reduced in width when passing through the first reducer lens 260, the air between the first reducer and the second reducer, and the second reducer lens 270 in the order named. Light C which is reduced in width may be incident on a rear surface of the light source lens 250 in a direction parallel to the optical axis of the second reducer lens 270.

Light D incident on the rear surface of the light source lens 250 may pass through the rear of the reflection unit 251 and be then incident on the rear surface of the reflection unit 251, or may be reflected from the rear surface of the reflection unit 251.

Light E reflected by the reflection unit 251 may be reflected in a direction toward the optical axis X of the light source lens 250 or may be refracted from the rear surface of the light source lens 250.

Light F refracted from the rear surface of the light source lens 250 may pass between the rear surface of the light source lens 250 and the reflective phosphor 241 and be then incident on the phosphor 241.

A wavelength of the light incident on the phosphor 241 may be converted by the phosphor 241, and white-based light F may be emitted by the phosphor 241 toward the rear surface of the light source lens 250.

The light emitted by the phosphor 241 toward the rear surface of the light source lens 250 may pass through the light source lens 250, and such light G may pass through the front surface of the light source lens 250 and be then incident on a collimator lens 540 through the rear surface of the collimator lens 540.

The light incident on the collimator lens 540 may pass through the collimator lens 540 and be then refracted from the front surface of the collimator lens 540 to thereby be emitted toward the front of the collimator lens 540 in a direction parallel to the optical axis of the collimator lens 540.

Light H emitted toward the front of the collimator lens 540 may be parallel light.

The light H emitted toward the front of the collimator lens 540 may be incident on the focusing lens 530 through the rear surface of the focusing lens 530.

Light I incident on the focusing lens 530 may pass through the focusing lens 530 and be then refracted and concentrated from the front surface of the focusing lens 530 thereby to be emitted toward the front of the focusing lens 530.

Light J emitted toward the front of the focusing lens 530 may pass through the image forming point and the focus FF. A part of the light J emitted toward the front of the focusing lens 530 may be shielded by the shield 573 disposed at the image forming point.

A part of the light J emitted toward the front of the focusing lens 530 may be light K1 passing through the upper opening 573c formed on the shield 573.

The rest of the light J emitted toward the front of the focusing lens 530 may be light K2 passing through the lower opening 573d formed in the shield 573.

The light K1 passing through the upper opening 573c may converge at one point when passing through the focus FF, and be then emitted to a portion of the focusing lens 530 below the optical axis of the focusing lens 530.

Light L1 passing through the upper opening 573c and then the focus FF of the focusing lens 530 may be incident on the third projection lens 502 through the rear surface of the third projection lens 502.

The light incident on the third projection lens 502 may pass through the third projection lens 502 and be then refracted from the front surface of the third projection lens 502 thereby to be emitted toward the front of the third projection lens 502 in a direction parallel to the optical axi of the third projection lens 502.

Light M1 emitted toward the front of the third projection lens 502 may be a low beam. In addition, the light M1 emitted toward the front of the third projection lens 502 may be parallel light.

The light K2 passing through the lower opening 573d may be incident on the mirror 571. The mirror 571 may reflect the light K2, passing through the lower opening 573d, toward the third projection lens 502.

Light L2 reflected by the mirror 571 may be incident on the third projection lens 502 without passing through the focus FF of the focusing lens 530.

The light incident ont the third projection lens 502 may pass through the third projection lens 502 and be then refracted from the front surface of the third projection lens 502 to thereby be emitted toward the front of the third projection lens 502 in a direction parallel to the optical axis of the third projection lens 502.

Light M2 emitted toward the front of the third projection lens 502 may be a low beam. In addition, the light M2 emitted toward the front of the third projection lens 502 may be parallel light.

The light M1 passing through the upper opening 573c of the shield 573 and emitted toward the front of the third projection lens 502 may overlap the light M2 passing through the lower opening 573d of the shield 573 and emitted toward the front of the third projection lens 502. As a result, an amount of light emitted through the third projection lens 502 may increase.

A plurality of light function modules 20, 30, and 40 may be spaced apart from one another. According to an embodiment of the present invention, the first light function module 20 and the second light function module 30 may be spaced apart from each other in a vertical direction. The first light function module 20 and the third light function module 40 may be spaced apart from each other in a horizontal direction.

A dissipation module 600 of the first light function module 20 may include a heat pipe 610 disposed to contact a light source 230 of the second light function module 30. The heat pipe 610 disposed to contact the first light function module 20 may be disposed to contact either or both the light source 230 of the second light function module 30 and a light source 230 of the third light function module 30.

The dissipation module 600 of the third light function module 20 may include a dissipation plate 620 disposed to contact the light source 230 of the first light function module 20, and the dissipation plate 620 may be disposed to contact either or both the light source 230 of the second light function module 30 and the light source 230 of the third light function module 40.

Hereinafter, configurations and effects different from the above embodiments will be described, and description about a configuration identical or similar to those above described will be omitted.

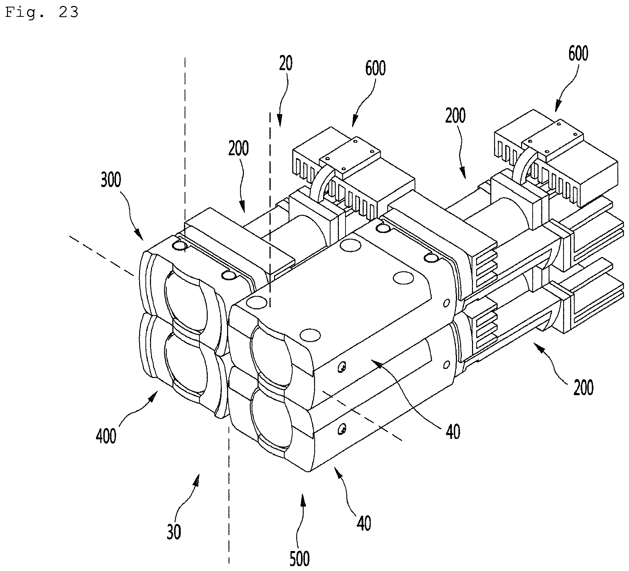

FIG. 23 is a perspective view of lighs function modules included in a light lamp for vehicle according to a second embodiment of the present invention.

The light lamp for vehicle according to the second embodiment of the present invention may include a plurality of light function modules 20, 30, and 40. The light function modules 20, 30, and 40 may be laminated in a vertical direction, no matter how many they are. In another example, the light function modules 20, 30, and 40 may be laminated in a vertical direction, no matter how many they are.

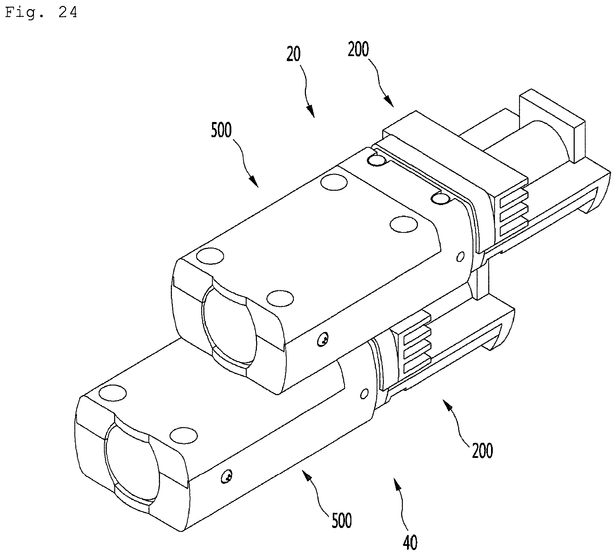

FIG. 24 is a perspective view of light function modules including a light lamp for vehicle according to a third embodiment of the present invention.

The light lamp for vehicle may include a plurality of light function modules 40 spaced apart from one another in a vertical direction. One of the light function modules 40 may be fixed to another light function module 40. One of the light function modules 40 may be in contact with another light function module 40. One of the light function modules 40 may be guided slidingly along a longitudinal direction of another light function module 40.

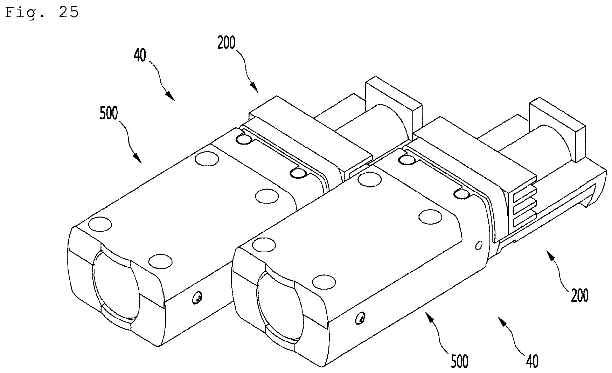

FIG. 25 is a perspective view of light function modules included in a light lamp for vehicle according to a fourth embodiment of the present invention.

The light lamp for vehicle may include the plurality of light function modules 40 spaced apart from one another in a horizontal direction. One of the light function modules 40 may be fixed a side of another light function module 40. One of the light function modules 40 may be in contact with a side of another light function module 40. One of the light function modules 40 may be guided slidingly in a longitudinal direction of another light function module 40.

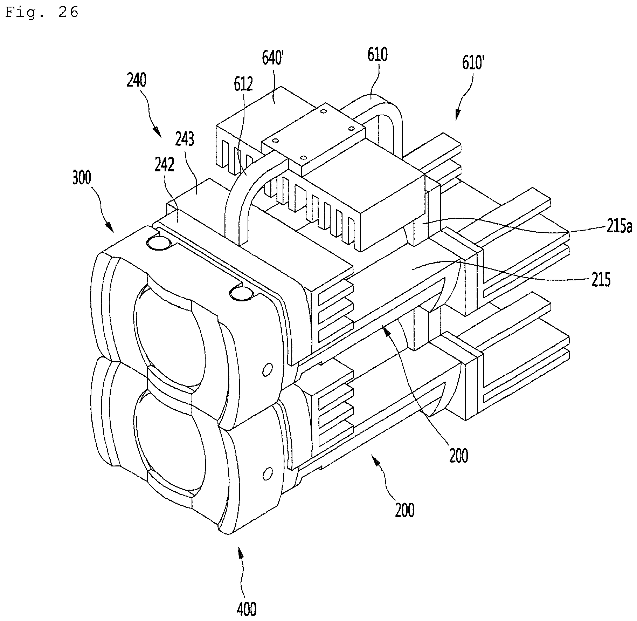

FIG. 26 is a perspective view of light function modules included in a light lamp for vehicle according to a fifth embodiment of the present invention.

A heat pipe 610 included in a dissipation module 600' may further include a connector 612 that is disposed to contact a phosphor 241 of a light source module 200.

In addition, the dissipation module 600' may further include a sub-dissipation plate 640' which is connected to the heat pipe 610 and disposed between the phosphor 241 and a light source 230.

The heat pipe 610 may dissipate heat generated by the light source 230 and heat generated by the phosphor 241.

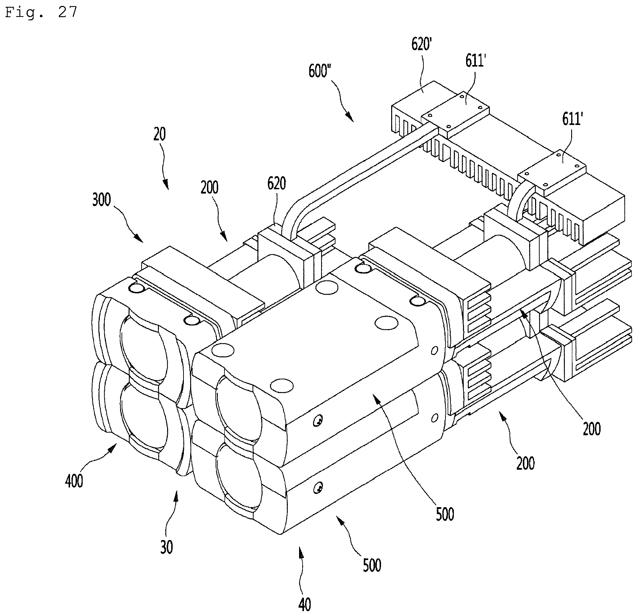

FIG. 27 is a perspective view of light function modules included in a light lamp for vehicle according to a sixth embodiment of the present invention.

There may be provided a plurality of dissipation modules 600", and a heat pipe 610 of each dissipation module 600" may include an extension part 611'. Each exteision part 611' may be connected to a dissipation plate 620'. In addition, the single dissipation plate 620' may be connected to a plurality of extension parts 611'.

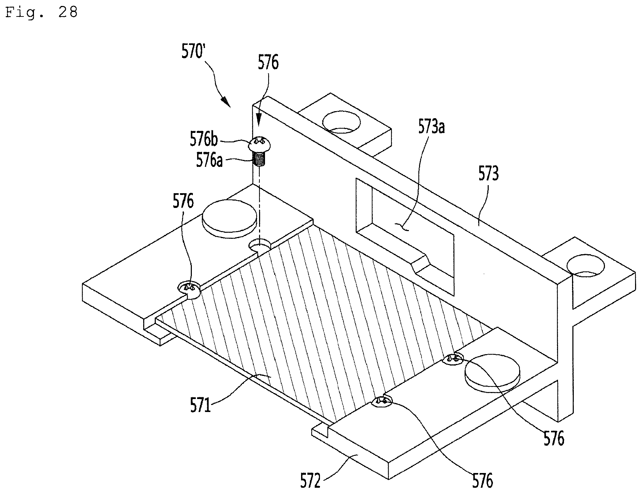

FIG. 28 is a perspective view of a shield retainer assembly included in a light lamp for vehicle according to a seventh embodiment of the present invention.

A shield retainer assembly 570' according to the seventh embodiment of the present invention may allow a mirror 571 to be mounted in the shield retainer assembly 570' using a fastening bolt 576.

The shield retainer assembly 570' may further include the fastening bolt 576. The fastening bolt 576 may include a thread 576b and a head 576a connected to the thread 576b.

The thread 576b may be fixed to a mirror mounting part 572, and the head 576a may press the mirror 571. As the head 576a presses the mirror 571, the fastening bolt 576 may fix the mirror 571 to the mirror mounting part 572.

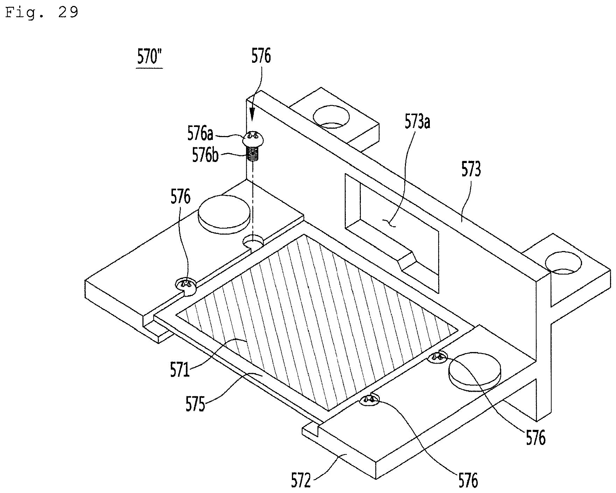

FIG. 29 is a perspective view of a shield retainer assembly included in a light lamp for vehicle according to an eighth embodiment of the present invention.

A shield retainer assembly 570" according to the eighth embodiment of the present invention may further include a mirror bracket 575.

The shield retainer assembly 570" may further include a mirror bracket 575 on which a mirror 571 is mounted, and the mirror bracket 575 may be fixed to a mirror mounting part 572.

The shield retainer assembly 570" may further include a fastening bolt which penetrates the mirror bracket 575 and the mirror mounting part 572. The fastening bolt 576 may include a thread 576b and a head 576a connected to the thread 576b. The thread 576b may be fixed to the mirror mounting part 572, and the head 576a may press the mirror bracket 575 and fix the mirror bracket 575 to the mirror mounting part 572.

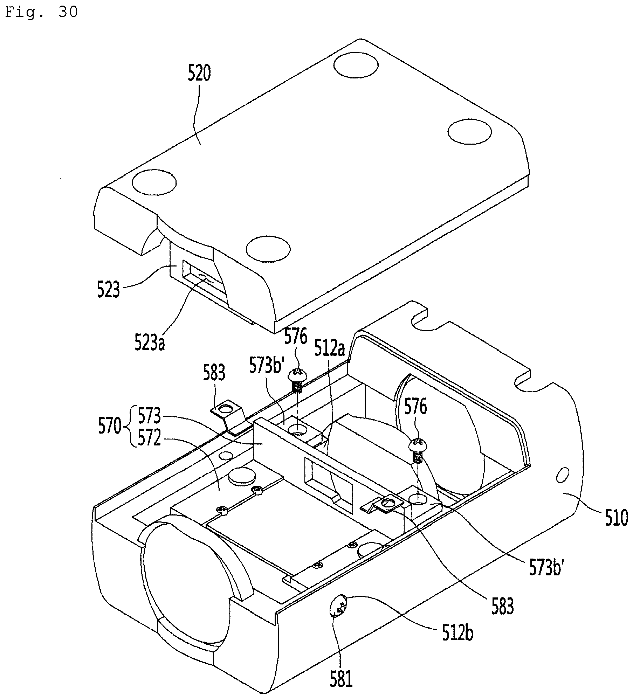

FIG. 30 is an exploded perspective view of a light distribution module included in a light lamp for vehicle according to a ninth embodiment of the present invention.

A light distribution module 500 according to the ninth embodiment of the present invention may further include a mounting part 512a protruding inwardly in a light distribution case 510. A shield retainer assembly 570 may further include a fixing part 573b' connected to the light distribution case 510, and the fixing part 573b' may be fixed to the mounting part 512a.

The light distribution module 300 may further include a fastening member 576, and the fastening member 576 may penetrate the mounting part 512a and the fixing part 573b'.

The fastening member 576 may be disposed such that a longitudinal direction of the fastening member 576 is perpendicular to a longitudinal direction of the light distribution case 510.

AS the shield retainer assembly 570 is fixed to the light distribution case 510 using the fastening member 576 to be perpendicular to the longitudinal direction of the light distribution case 510, it is possible to omit or simplify a structure that finely adjusts the shield retainer assembly 570. When fixing the shield retainer assembly 570 to the light distribution case 510, it is possible to adjust the shield retainer assembly 570 in a vertical direction of the light distribution case 510. Thus, a vertically moving screw (not shown) for finely adjusting the shield retainer assembly 570 in the vertical direction may be omitted.

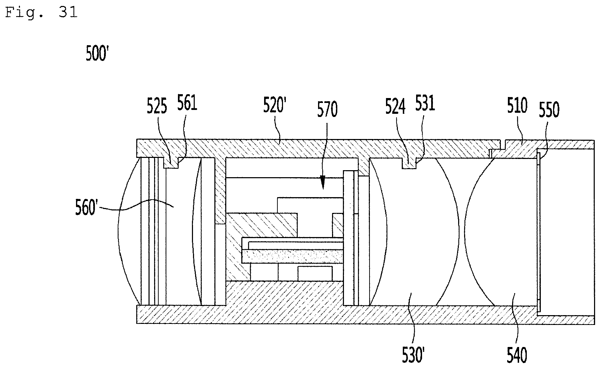

FIG. 31 is a cross-sectional view of a third light distribution module according to a tenth embodiment of the present invention.

A third light distribution module 500' according to the tenth embodiment of the present invention may include a light distribution cover 520' including at least one pressing protrusion 524 or 525.

The pressing protrusion 524 or 525 may protrude toward the bottom of the light distribution cover 520'.

A focusing lens 530' may include a front surface, a rear surface, and a circumferential surface connecting the front surface and the rear surface. The focusing lens 530' may include a groove 531 formed on the circumferential surface.

When the light distribution case 510 and the light distribution cover 520' are coupled to each other, the pressing protrusion 524 may press the groove 531. The focusing lens 530' may be fixed or constrained in a vertical direction of the light distribution case 510.

A third projection lens 560' may include a front surface, a rear surface, a circumferential surface connecting the front surface and the rear surface, and a groove 561 formed on the circumferential surface. When the light distribution case 510 and the light distribution cover 520' are coupled to each other, the pressing protrusion 525 may press the groove 561. The third projection lens 560' may be fixed or constrained in a vertical direction of the light distribution case 510.

The light lamp for vehicle according to the first to tenth embodiments of the present invention may be included in a vehicle.

The above descriptions are only for illustrative purposes, and it will be apparent to those skilled in the art that various modifications and changes can be made thereto without departing from the scope of the present invention.

The scope of the present invention is defined by the appended claims.

## Claims

1. A light lamp (1) for vehicle, comprising a plurality of light function modules (20, 30, 40),
wherein each of the plurality of light function modules (20, 30, 40) comprises:
a light source module (200) having a light source (230);
a light distribution module (300, 400, 500) disposed in front of the light source module (200) and configured to distribute light emitted by the light source module (200); and
a dissipation module (600) disposed behind the light source module (200) and configured to dissipate heat generated by the light source (230), and
wherein the light source module (200) comprises:
a light source lens (250);
a light emission body (210) accommodating the light source lens (250);
a light emission cover (220) covering the light
emission body (210);
a phosphor assembly (240) connected to the light emission body (210); and
a reflection unit (251) disposed in front of the light source lens (250) and configured to reflect light, passing through the light source lens (250), toward the light source lens (250),
wherein the light source module (200) further comprises a first reducer lens (260) configured to reduce width of light emitted by the light source,
wherein, the first reducer lens (260) is disposed between the light emission body (210) and the light emission cover (220) or between the light source (230) and the light source lens (250)
and
the light source module (200) further comprises a second reducer lens (270) spaced apart from the first reducer lens (260) and configured to reduce a width of light emitted by the first reducer lens, the second reducer lens (270) being disposed between the light emission body (210) and the light emission cover (220) or between the first reducer lens (260) and the light source lens (250),
wherein the phosphor assembly (240) comprises:
a phosphor (241) configured to convert a wavelength of incident light and reflect the wavelength-converted light;
a bracket (242) in which the phosphor (241) is mounted;
a dissipation member (243) in contact with a rear surface of the phosphor (241),
and
wherein the light emission body (210) comprises:
a light emission head part (214) in which the light source lens (250) is mounted; and
a light emission tail part (215) connected to a rear of the light emission head part (214), wherein a light entrance hole (214a) and a phosphor assembly coupling hole (214b) are formed at a rear of the light emission head part (214),
wherein the phosphor assembly (240) is coupled to a rear of the light emission head part (214) and covers the phosphor assembly coupling hole (214b), and
wherein the bracket (242) is fixed to a rear surface of the light emission head part (214), and the phosphor (241) faces a rear surface of the light source lens (250).

2. The light lamp (1) according to claim 1, wherein the reflection unit (251) is a coating layer coated on a part of a front surface of the light source lens (250).

3. The light lamp (1) according to claim 1 or 2, wherein a light source lens insertion hole (214c) is formed at a front of the light emission head part (214), and
wherein, when the light source lens (250) is inserted into the light source lens insertion hole (214c), a front surface of the light source lens (250) is exposed outside the light emission head part (214).

4. The light lamp (1) according to claim 3,
wherein the light source module (200) is coupled to a front surface of the light emission head part (214), and
wherein the light source module (200) further comprises a light source lens retainer (280) configured to fix the light source lens (250) to the light emission head part (214),
wherein, preferably, the light source lens retainer (280) comprises a light blocking section (281) that faces at least part of the front surface of the light source lens (250).

5. The light lamp (1) according to claim 4, wherein the light source module (200) further comprises a diffuser (290) disposed in front of the light source lens retainer (280) and facing the front surface of the light source lens (250).

6. The light lamp (1) according to any one of claims 1 to 5, wherein, a flange section (215a) is formed at a rear of the light emission tail part (215), and
wherein, preferably, the light emission cover (220) covers a lower portion of the light emission body (210) and is disposed between the flange section (215a) and the light emission head part (214).

7. The light lamp (1) according to claim 6 wherein the light emission tail part (215) comprises a light source insertion hole (215b) that penetrates the flange section (215a),
wherein the light source (230) is inserted into the light source insertion hole (215b) and disposed between the light emission body (210) and the light emission cover (220).

8. The light lamp (1) according to claim 7,
wherein the light source (230) comprises a light emitter (231) and a base portion (232),
wherein the light emission head part (214) comprises a stopping protrusion (215c) formed along an inner circumferential surface of the light source insertion hole (215b), and
wherein, when the light source (230) is inserted into the light source insertion hole (215b), a front surface of the base portion (232) is stopped by the stopping protrusion (215c) and a rear surface of the base portion (232) is exposed outside the light emission head part (214).

9. The light lamp according to claim 8,
wherein the dissipation module (600) comprises a heat pipe (610) in contact with at least part of the rear surface of the base portion (232),
wherein, preferably,
the dissipation module (600) further comprises a dissipation plate (620) in contact with the heat pipe (610), and preferably the dissipation plate (620) comprises a fixing part (622) fixed to the flange section (215a), and a light source pressing part (623) pressing the heat pipe (610), the heat pipe (610) being fixed between the flange section (215a) and the light source pressing part (623).

10. The light lamp (1) according to claim 8 or 9,
wherein the dissipation module (600) comprises a/the heat pipe (610) in contact with a part of the rear surface of the base portion (232), and a dissipation plate (620) in contact with the heat pipe (610),
wherein, preferably,
the dissipation plate (620) comprises a light source pressing part (623) in contact with the part of the rear surface of the base portion
and/or the heat pipe (610) further comprises an extension part (611) bent toward a rear of the light emission body.

11. The light lamp (1) according to claim 10, wherein the dissipation module (600) further comprises a sub-dissipation plate (640) in contact with the extension part (611).

## Patentansprüche

1. Lichtlampe (1) für ein Fahrzeug, die mehrere Lichtfunktionsmodule (20, 30, 40) aufweist, wobei jedes der mehreren Lichtfunktionsmodule (20, 30, 40) aufweist:
ein Lichtquellenmodul (200) mit einer Lichtquelle (230);
ein Lichtverteilungsmodul (300, 400, 500), das vor dem Lichtquellenmodul (200) angeordnet und konfiguriert ist, durch das Lichtquellenmodul (200) emittiertes Licht zu verteilen; und
ein Ableitungsmodul (600), das hinter dem Lichtquellenmodul (200) angeordnet und konfiguriert ist, durch die Lichtquelle (230) erzeugte Wärme abzuleiten, und
wobei das Lichtquellenmodul (200) aufweist:
eine Lichtquellenlinse (250);
einen Lichtemissionskörper (210), der die Lichtquellenlinse (250) beherbergt;
eine Lichtemissionsabdeckung (220), die den Lichtemissionskörper (210) bedeckt;
eine Leuchtstoffanordnung (240), die mit dem Lichtemissionskörper (210) verbunden ist; und
eine Reflexionseinheit (251), die vor der Lichtquellenlinse (250) angeordnet und konfiguriert ist, Licht, das durch die Lichtquellenlinse (250) geht, zur Lichtquellenlinse (250) zu reflektieren,
wobei das Lichtquellenmodul (200) ferner eine erste Reduzierlinse (260) aufweist, die konfiguriert ist, die Breite des durch die Lichtquelle emittierten Lichts zu reduzieren,
wobei die erste Reduzierlinse (260) zwischen dem Lichtemissionskörper (210) und der Lichtemissionsabdeckung (220) oder zwischen der Lichtquelle (230) und der Lichtquellenlinse (250) angeordnet ist,
und
das Lichtquellenmodul (200) ferner eine zweite Reduzierlinse (270) aufweist, die von der ersten Reduzierlinse (260) beabstandet und konfiguriert ist, die Breite des durch die erste Reduzierlinse emittierten Lichts zu reduzieren, wobei die zweite Reduzierlinse (270) zwischen dem Lichtemissionskörper (210) und der Lichtemissionsabdeckung (220) oder zwischen der ersten Reduzierlinse (260) und der Lichtquellenlinse (250) angeordnet ist, wobei die Leuchtstoffanordnung (240) aufweist:
einen Leuchtstoff (241), der konfiguriert ist, eine Wellenlänge des einfallenden Lichts umzuwandeln und das wellenlängengewandelte Licht zu reflektieren;
eine Halterung (242), in der der Leuchtstoff (241) angebracht ist;
ein Ableitungselement (243), das mit der Rückseite des Leuchtstoffs (241) in Kontakt steht,
und
wobei der Lichtemissionskörper (210) aufweist:
ein Lichtemissionskopfteil (214), in dem die Lichtquellenlinse (250) angebracht ist; und
ein Lichtemissionsendteil (215), der mit der Rückseite des Lichtemissionskopfteils (214) verbunden ist,
wobei ein Lichteintrittsloch (214a) und ein Leuchtstoffanordnungs-Kopplungsloch (214b) auf einer Rückseite des Lichtemissionskopfteils (214) ausgebildet sind,
wobei die Leuchtstoffanordnung (240) mit einer Rückseite des Lichtemissionskopfteils (214) gekoppelt ist und das Leuchtstoffanordnungs-Kopplungsloch (214b) abdeckt, und wobei die Halterung (242) an einer Rückseite des Lichtemissionskopfteils (214) befestigt ist, und der Leuchtstoff (241) zu einer Rückseite der Lichtquellenlinse (250) weist.

2. Lichtlampe (1) nach Anspruch 1, wobei die Reflexionseinheit (251) eine Beschichtungsschicht ist, die auf einem Teil der Vorderfläche der Lichtquellenlinse (250) beschichtet ist.

3. Lichtlampe (1) nach Anspruch 1 oder 2,
wobei ein Lichtquellenlinsen-Einsatzloch (214c) auf einer Vorderseite des Lichtemissionskopfteils (214) ausgebildet ist, und
wobei, wenn die Lichtquellenlinse (250) in das Lichtquellenlinsen-Einsatzloch (214c) eingesetzt ist, eine vordere Fläche der Lichtquellenlinse (250) vom Lichtemissionskopfteil (214) nach außen freiliegt.

4. Lichtlampe (1) nach Anspruch 3,
wobei das Lichtquellenmodul (200) mit einer vorderen Fläche des Lichtemissionskopfteils (214) gekoppelt ist, und
wobei das Lichtquellenmodul (200) ferner einen Lichtquellenlinsenhalter (280) aufweist,
der konfiguriert ist, die Lichtquellenlinse (250) am Lichtemissionskopfteil (214) zu befestigen,
wobei der Lichtquellenlinsenhalter (280) vorzugsweise einen Lichtsperrabschnitt (281) aufweist, der mindestens zu einem Teil der vorderen Fläche der Lichtquellenlinse (250) weist.

5. Lichtlampe (1) nach Anspruch 4, wobei das Lichtquellenmodul (200) ferner einen Diffusor (290) aufweist, der vor dem Lichtquellenlinsenhalter (280) angeordnet ist und zur vorderen Fläche der Lichtquellenlinse (250) weist.

6. Lichtlampe (1) nach einem der Ansprüche 1 bis 5,
wobei ein Flanschabschnitt (215a) an der Rückseite des Lichtemissionsendteils (215) ausgebildet ist, und
wobei die Lichtemissionsabdeckung (220) vorzugsweise einen unteren Abschnitt des Lichtemissionskörpers (210) abdeckt und zwischen dem Flanschabschnitt (215a) und dem Lichtemissionskopfteil (214) angeordnet ist.

7. Lichtlampe (1) nach Anspruch 6,
wobei der Lichtemissionsendteil (215) ein Lichtquellen-Einsatzloch (215b) aufweist, das den Flanschabschnitt (215a) durchdringt,
wobei die Lichtquelle (230) in das Lichtquellen-Einsatzloch (215b) eingesetzt ist und zwischen dem Lichtemissionskörper (210) und der Lichtemissionsabdeckung (220) angeordnet ist.

8. Lichtlampe (1) nach Anspruch 7,
wobei die Lichtquelle (230) einen Lichtstrahler (231) und einen Basisabschnitt (232) aufweist,
wobei der Lichtemissionskopfteil (214) einen Stoppvorsprung (215c) aufweist, der längs einer Innenumfangsfläche des Lichtquellen-Einsatzlochs (215b) ausgebildet ist, und
wobei, wenn die Lichtquelle (230) in das Lichtquellen-Einsatzloch (215b) eingesetzt wird, eine vordere Fläche des Basisabschnitts (232) durch den Stoppvorsprung (215c) gestoppt wird und eine Rückseite des Basisabschnitts (232) vom Lichtemissionskopfteil (214) nach außen freiliegt.

9. Lichtlampe nach Anspruch 8,
wobei das Ableitungsmodul (600) ein Wärmerohr (610) aufweist, das mit mindestens einem Teil der Rückseite des Basisabschnitts (232) in Kontakt steht,
wobei
das Ableitungsmodul (600) vorzugsweise ferner eine Ableitungsplatte (620) aufweist, die mit dem Wärmerohr (610) in Kontakt steht,
und
die Ableitungsplatte (620) vorzugsweise einen Befestigungsteil (622), der am Flanschabschnitt (215a) befestigt ist, und einen Lichtquellen-Pressteil (623) aufweist, der auf das Wärmerohr (610) drückt, wobei das Wärmerohr (610) zwischen dem Flanschabschnitt (215a) und dem Lichtquellen-Pressteil (623) befestigt ist.

10. Lichtlampe (1) nach Anspruch 8 oder 9,
wobei das Ableitungsmodul (600) ein/das Wärmerohr (610), das mit einem Teil der Rückseite des Basisabschnitts (232) in Kontakt steht, und eine Ableitungsplatte (620) aufweist, die mit dem Wärmerohr (610) in Kontakt steht,
wobei
die Ableitungsplatte (620) vorzugsweise einen Lichtquellen-Pressteil (623) aufweist, der mit dem Teil der Rückseite des Basisabschnitts in Kontakt steht,
und/oder
das Wärmerohr (610) ferner einen Verlängerungsteil (611) aufweist, der zu einer Rückseite des Lichtemissionskörpers gebogen ist.

11. Lichtlampe (1) nach Anspruch 10, wobei das Ableitungsmodul (600) ferner eine Unterableitungsplatte (640) aufweist, die mit dem Verlängerungsteil (611) in Kontakt steht.

## Revendications

1. Lampe (1) pour véhicule, comprenant une pluralité de modules de fonction d'éclairage (20, 30, 40),
où chaque module de la pluralité de modules de fonction d'éclairage (20, 30, 40) comprend :
un module de source lumineuse (200) comportant une source lumineuse (230) ;
un module de distribution de lumière (300, 400, 500) disposé devant le module de source lumineuse (200) et prévu pour répartir la lumière émise par le module de source lumineuse (200) ; et
un module de dissipation (600) disposé derrière le module de source lumineuse (200) et prévu pour dissiper la chaleur générée par la source lumineuse (230), et
où le module de source lumineuse (200) comprend :
une lentille de source lumineuse (250) ;
un corps d'émission lumineuse (210) recevant la lentille de source lumineuse (250) ;
un couvercle d'émission lumineuse (220) recouvrant le corps d'émission lumineuse (210) ;
un dispositif luminophore (240) raccordé au corps d'émission lumineuse (210) ; et
une unité de réflexion (251) disposée devant la lentille de source lumineuse (250) et prévue pour réfléchir la lumière traversant la lentille de source lumineuse (250) vers la lentille de source lumineuse (250),
où le module de source lumineuse (200) comprend en outre une première lentille réductrice (260) prévue pour réduire la largeur de la lumière émise par la source lumineuse, ladite première lentille réductrice (260) étant disposée entre le corps d'émission lumineuse (210) et le couvercle d'émission lumineuse (220) ou entre la source lumineuse (230) et la lentille de source lumineuse (250), et où
le module de source lumineuse (200) comprend en outre une deuxième lentille réductrice (270) espacée de la première lentille réductrice (260) et prévue pour réduire la largeur de la lumière émise par la première lentille réductrice, ladite deuxième lentille réductrice (270) étant disposée entre le corps d'émission lumineuse (210) et le couvercle d'émission lumineuse (220) ou entre la première lentille réductrice (260) et la lentille de source lumineuse (250),
où le dispositif luminophore (240) comprend :
un luminophore (241) prévu pour convertir une longueur d'onde de la lumière incidente et réfléchir la lumière dont la longueur d'onde a été convertie ;
un support (242) où le luminophore (241) est monté ;
un élément de dissipation (243) en contact avec une surface arrière du luminophore (241), et
où le corps d'émission lumineuse (210) comprend :
une partie de tête d'émission lumineuse (214) où la lentille de source lumineuse (250) est montée ; et
une partie de queue d'émission lumineuse (215) raccordée à l'arrière de la partie de tête d'émission lumineuse (214),
où un orifice d'entrée de lumière (214a) et une ouverture de couplage (214b) de dispositif luminophore sont formés à l'arrière de la partie de tête d'émission lumineuse (214),
où le dispositif luminophore (240) est raccordé à l'arrière de la partie de tête d'émission lumineuse (214) et recouvre l'ouverture de couplage (214b) de dispositif luminophore, et où le support (242) est fixé à une surface arrière de la partie de tête d'émission lumineuse (214), et le luminophore (241) est opposé à une surface arrière de la lentille de source lumineuse (250).

2. Lampe (1) selon la revendication 1, où l'unité de réflexion (251) est une couche de revêtement appliquée sur une partie de la surface avant de la lentille de source lumineuse (250).

3. Lampe (1) selon la revendication 1 ou la revendication 2,
où une ouverture d'insertion (214c) de lentille de source lumineuse est formée sur l'avant de la partie de tête d'émission lumineuse (214), et
où, quand la lentille de source lumineuse (250) est insérée dans l'ouverture d'insertion (214c) de lentille de source lumineuse, la surface avant de la lentille de source lumineuse (250) est exposée à l'extérieur de la partie de tête d'émission lumineuse (214).

4. Lampe (1) selon la revendication 3,
où le module de source lumineuse (200) est raccordé à une surface avant de la partie de tête d'émission lumineuse (214), et
où le module de source lumineuse (200) comprend en outre une fixation (280) de lentille de source lumineuse prévue pour fixer la lentille de source lumineuse (250) sur la partie de tête d'émission lumineuse (214),
où la fixation (280) de lentille de source lumineuse comprend préférentiellement une section de blocage de lumière (281) opposée au moins partiellement à la surface avant de la lentille de source lumineuse (250).

5. Lampe (1) selon la revendication 4, où le module de source lumineuse (200) comprend en outre un diffuseur (290) disposé devant la fixation (280) de lentille de source lumineuse et opposé à la surface avant de la lentille de source lumineuse (250).

6. Lampe (1) selon l'une des revendications 1 à 5,
où une section de bride (215a) est formée sur l'arrière de la partie de queue d'émission lumineuse (215), et où le couvercle d'émission lumineuse (220) recouvre préférentiellement, une partie inférieure du corps d'émission lumineuse (210) et est disposé entre la section de bride (215a) et la partie de tête d'émission lumineuse (214).

7. Lampe (1) selon la revendication 6,
où la partie de queue d'émission lumineuse (215) comprend une ouverture d'insertion (215b) de source lumineuse ménagée dans la section de bride (215a),
où la source lumineuse (230) est insérée dans l'ouverture d'insertion (215b) de source lumineuse et disposée entre le corps d'émission lumineuse (210) et le couvercle d'émission lumineuse (220).

8. Lampe (1) selon la revendication 7,
où la source lumineuse (230) comprend un émetteur de lumière (231) et une partie de base (232),
où la partie de tête d'émission lumineuse (214) comprend une saillie d'arrêt (215c) formée sur une surface circonférentielle intérieure de l'ouverture d'insertion (215b) de source lumineuse, et
où, quand la source lumineuse (230) est insérée dans l'ouverture d'insertion (215b) de source lumineuse, une surface avant de la partie de base (232) bute contre la saillie d'arrêt (215c) et une surface arrière de la partie de base (232) est exposée à l'extérieure de la partie de tête d'émission lumineuse (214).

9. Lampe selon la revendication 8,
où le module de dissipation (600) comprend une conduite de chaleur (610) en contact avec au moins une partie de la surface arrière de la partie de base (232),
où le module de dissipation (600) comprend en outre préférentiellement une plaque de dissipation (620) en contact avec la conduite de chaleur (610), et la plaque de dissipation (620) comprend préférentiellement une partie de fixation (622) fixée à la section de bride (215a), et une partie de pression (623) de source lumineuse serrant la conduite de chaleur (610), ladite conduite de chaleur (610) étant fixée entre la section de bride (215a) et la partie de pression (623) de source lumineuse.

10. Lampe (1) selon la revendication 8 ou la revendication 9,
où le module de dissipation (600) comprend :
une/la conduite de chaleur (610) en contact avec une partie de la surface arrière de la partie de base (232), et une plaque de dissipation (620) en contact avec la conduite de chaleur (610),
où la plaque de dissipation (620) comprend préférentiellement une partie de pression (623) de source lumineuse en contact avec la partie de surface arrière de la partie de base et/ou
la conduite de chaleur (610) comprend en outre une partie d'extension (611) pliée vers l'arrière du corps d'émission lumineuse.

11. Lampe (1) selon la revendication 10, où le module de dissipation (600) comprend en outre une sous-plaque de dissipation (640) en contact avec la partie d'extension (611).
